# EUROPEAN PATENT APPLICATION

(11) **EP 4 380 290 A1**
(43) Date of publication of application: **05.06.2024**
(21) Application number: 23213015.3
(22) Date of filing: 29.11.2023
(51) Int. Cl.: H04W 74/0816, H04W 74/00, H04W 84/12

(54) **TRIGGERED TRANSMISSION OPPORTUNITY SHARING**

(30) Priority: 29.11.2022 US 202263428458 P
(71) Applicant: Comcast Cable Communications, LLC, Philadelphia, PA 19103 (US)
(72) Inventor: ERKUCUK, Serhat, Philadelphia, PA 19103 (US); KIM, Jeongki, Philadelphia, PA 19103 (US); DINAN, Esmael Hejazi, Philadelphia, PA 19103 (US); LANANTE, Leonardo Alisasis, Philadelphia, PA 19103 (US)
(74) Representative: V.O.

(57) **Abstract**

An access point may communicate with one or more computing devices such as wireless devices and/or stations. The access point may receive an indication of beamforming information from the one or more computing devices. Based on the beamforming information, the access point may send a message, such as a multi-user request-to-send trigger frame, comprising a field and/or a subfield for a triggered transmission opportunity sharing procedure.

## Description

### CROSS-REFERENCE TO RELATED APPLICATIONS

This application claims the benefit of U.S. Provisional Application No. 63/428,458, filed on November 29, 2022. The above referenced applications are hereby incorporated by reference in their entireties.

### BACKGROUND

An access point allocates resources of a transmission opportunity to a computing device such as a wireless device and/or station.

### SUMMARY

The following summary presents a simplified summary of certain features. The summary is not an extensive overview and is not intended to identify key or critical elements.

An access point may communicate with a computing device such as a wireless device and/or a station. One or more computing devices may communicate with the access point and/or with each other. The access point may receive an indication of beamforming information from the one or more computing devices. Based on the beamforming information, the access point may send a message (such as a multi-user request-to-send trigger frame) comprising a field and/or subfield (e.g., a sharing mode subfield set to a non-zero value) for a triggered transmission opportunity sharing procedure. The triggered transmission opportunity sharing procedure may be used to allow an access point to allocate a portion of time within an obtained transmission opportunity to multiple computing devices for sending data to peer computing devices simultaneously. The triggered transmission opportunity sharing procedure may be used to allow the one or more computing devices performing beamforming training with peer comuting devices, where the beamforming training obtains a beamformed link between the one or more computing device and the peer devices. The beamformed link provides an advantage, such as increasing transmission reliability and decrasing error rate.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3 shows an example format of a Medium Access Control (MAC) frame.
FIG. 4 shows an example of a Quality of Service (QoS) null frame indicating buffer status information.
FIG. 5 shows an example format of a physical layer (PHY) protocol data unit (PPDU).
FIG. 6 shows an example of a Multi-User Request-to-Send (MU-RTS) trigger frame which may be used in a triggered Transmit Opportunity (TXOP) sharing (TXS) procedure.
FIG. 7 shows an example of a TXS procedure.
FIG. 8 shows an example of a TXS procedure.
FIG. 9 shows an example of an AP and two stations that operate over multiple links in sub-10 GHz and mmWave bands.
FIG. 10A, FIG. 10B shows examples of communication between two stations in the mmWave band.
FIG. 11 shows an example of triggered TXS procedure (Mode=2) for the mmWave band.
FIG. 12 shows an example of a proposed TXS procedure performed over a mmWave band.
FIG. 13 shows another example of a proposed TXS procedure performed over a mmWave band.
FIG. 14 shows another example of a proposed TXS procedure performed over a mmWave band.
FIG. 15 shows another example of a proposed TXS procedure performed over a mmWave band.
FIG. 16A, FIG. 16B, FIG. 16C shows examples of frames/fields in which beamforming information may be signaled by a station to an AP.
FIG. 17 shows an example process of the station allocation using the beamforming information.
FIG. 18 shows another example process of the station allocation using the beamforming information.
FIG. 19 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

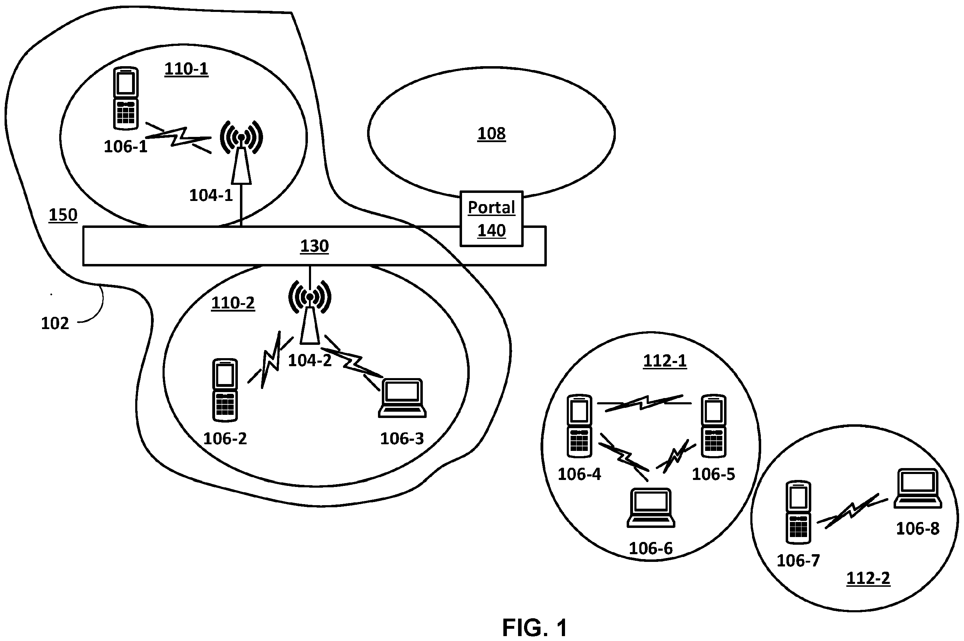

FIG. 1 shows example wireless communication networks. The example wireless communication networks may be a wireless local area network (WLAN) 102. The WLAN 102 may comprise an Institute of Electrical and Electronic Engineers (IEEE) 802.11 infrastructure network, or any other type of communication network. The WLAN 102 may comprise one or more basic service sets (BSSs) 110-1 and 110-2. BSSs 110-1 and 110-2 may each include a set of an access point (AP or AP station) and at least one station (station or non-AP station). For example, BSS 110-1 includes an AP 104-1 and a station 106-1, and BSS 110-2 includes an AP 104-2 and stations 106-2 and 106-3. The AP and the at least one station in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more APs (e.g., APs 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where stations 106-4, 106-5 and 106-6 may be configured to form a first IBSS 112-1 and stations 106-7 and 106-8 may be configured to form a second IBSS 112-2. An ad-hoc network and/or IBSS is a network that includes a plurality of stations without a centralized communication device, such as an AP. The plurality of stations may be configured to communicate without requiring the presence of an AP. For example, the plurality of stations in the IBSS may communicate with each other using peer-to-peer communication (e.g., not via an AP). IBSSs do not include a centralized management entity (e.g., an AP) configured to perform a centralized management. stations within an IBSS are managed in a distributed manner. stations forming an IBSS may be fixed and/or mobile. The stations (e.g., stations 106-4, 106-5, 106-6, 106-7, 106-8) may or may not be permitted to access the DS 130 to constitute a self-contained network.

A station may comprise one or more layers in accordance with the open systems interconnection (OSI) model. For example, stations may comprise a medium access control (MAC) layer that may be in accordance with a defined standard (e.g., an IEEE 802.11 standard, or any other standard). A physical (PHY) layer interface for a radio medium may include the APs and the non-AP stations (stations). The station may comprise one or more of a computing device, a mobile terminal, a wireless device, a wireless transmit/receive unit (WTRU), user equipment (LTE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a station. stations may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

A frequency band may include one or more sub-bands or frequency channels. For example, PPDUs conforming to the IEEE 802.11n, 802.11ac, 802.11ax and/or 802.11be standard amendments may be transmitted over the 2.4 GHz, 5 GHz, and/or 6 GHz bands, each of which may be divided into multiple 20 MHz channels. The PPDUs may be transmitted over a physical channel having a minimum bandwidth of 20 MHz. Larger channels may be formed through channel bonding. For example, PPDUs may be transmitted over physical channels having bandwidths of 40 MHz, 80 MHz, 160 MHz, or 320 MHz by bonding together multiple 20 MHz channels.

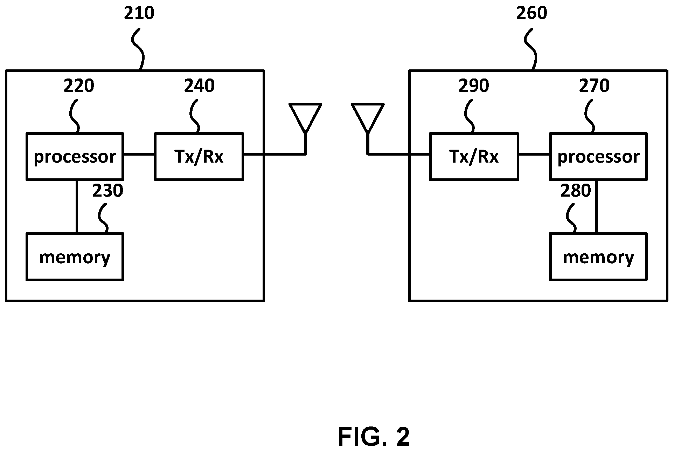

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP station) and the communication device 260 may operate as a station (e.g., a non-AP station). The communication device 210 may operate as a station (e.g., a non-AP station) and the communication device 260 may operate as an AP (e.g., an AP station). Also, or alternatively, the communication device 210 and the communication device 260 may both operate as stations (e.g., a non-AP stations) or may both operate as APs (e.g., AP stations).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the station as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the station as described herein.

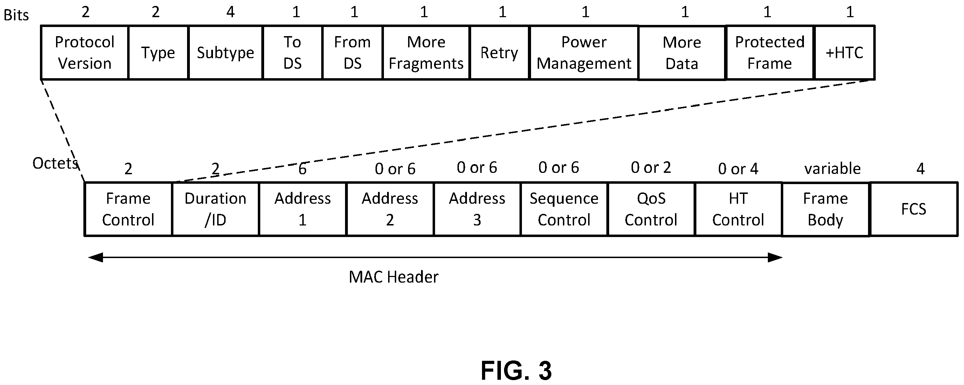

FIG. 3 shows an example format of a MAC frame. In operation, a station may construct a subset of MAC frames for transmission and may decode a subset of received MAC frames upon validation. The particular subsets of frames that a station may construct and/or decode may be determined by the functions supported by the station. A station may validate a received MAC frame using a frame check sequence (FCS) contained in the frame and may interpret certain fields from the MAC headers of all frames.

As shown in FIG. 3, a MAC frame may comprise a MAC header, a variable length frame body, and a frame check sequence (FCS). The MAC header may comprise a frame control field, an optional duration/ID field, address fields, an optional sequence control field, an optional QoS control field, and an optional high throughput (HT) control field.

The frame control field may comprise the following subfields: protocol version, type, subtype, To DS, From DS, more fragments, retry, power management, more data, protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS subtype data frame, which is a data frame that contains a QoS control field in its MAC header. The second MSB of the subtype field, bit 6 (B6) of the frame control field, if set to 1 in data subtypes, may indicate a data frame that contain no frame body field.

The To DS subfield may indicate whether a data frame is destined to the distribution system (DS). The From DS subfield may indicate whether a data frame originates from the DS. The more fragments subfield may be set to 1 in all data or management frames that have another fragment to follow of the MAC service data unit (MSDU) or MAC management protocol data unit (MMPDU) carried by the MAC frame. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving station may use this indication to aid in the process of eliminating duplicate frames. These rules may not apply for frames sent by a station under a block agreement. The power management subfield may be used to indicate the power management mode of a station.

The More Data subfield may indicate to a station in power save (PS) mode that bufferable units (Bus) are buffered for that station at the AP. The more data subfield may be valid in individually addressed data or management frames sent (e.g., transmitted) by an AP to a station in PS mode. The more data subfield may be set to 1 to indicate that at least one additional buffered BU is present for the station.

The protected frame subfield may be set to 1, for example, if the frame body field contains information that has been processed by a cryptographic encapsulation algorithm. The +HTC subfield may indicate that the MAC frame contains an HT control field.

The duration/ID field of the MAC header may indicate various contents depending on frame type and subtype and the QoS capabilities of the sending station. For example, in control frames of the power save poll (PS-Poll) subtype, the duration/ID field may carry an association identifier (AID) of the station that sent (e.g., transmitted) the frame in the 14 least significant bits (LSB), and the two most significant bits (MSB) may be both set to 1. In other frames sent by stations, the duration/ID field may contain a duration value (in microseconds) which may be used by a recipient to update a network allocation vector (NAV). The NAV may be a counter that indicates to a station an amount of time during which the station must defer from accessing the shared medium.

There may be up to four address fields in the MAC frame format. These fields may be used to indicate the basic service set identifier (BSSID), source address (SA), destination address (DA), transmitting address (TA), and receiving address (RA). Certain frames might not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information can vary by frame type, frame subtype, and type of sending (e.g., transmitting) station. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. It may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

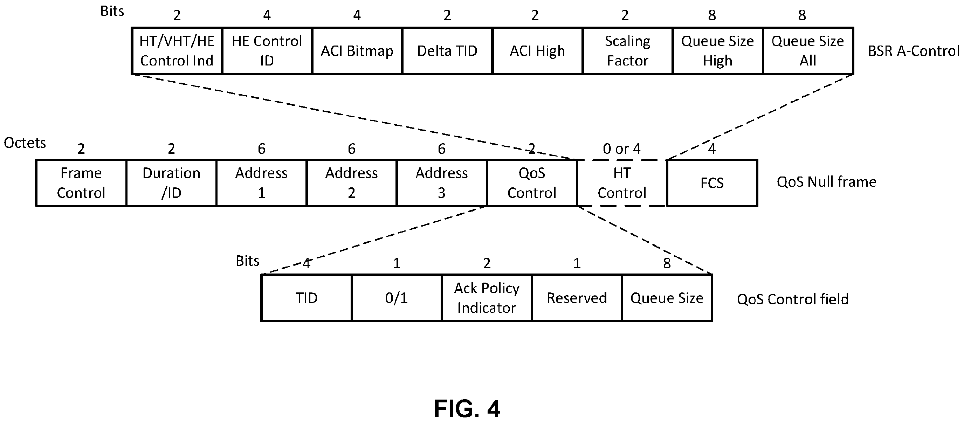

FIG. 4 shows an example of a QoS null frame indicating buffer status information. A QoS null frame refers to a QoS data frame with an empty frame body. A QoS null frame may comprise a QoS control field and an optional HT control field which may contain a buffer status report (BSR) control subfield. A QoS null frame indicating buffer status information may be sent (e.g., transmitted) by a station to an AP.

The QoS control field may comprise a traffic identifier (TID) subfield, an ack policy indicator subfield, and a queue size subfield (or a transmission opportunity (TXOP) duration requested subfield). The TID subfield may identify the TC or TS of traffic for which a TXOP is being requested, through the setting of the TXOP duration requested or queue size subfield. The encoding of the TID subfield depends on the access policy (e.g., allowed value 0 to 7 for enhanced distributed channel access (EDCA) access policy to identify user priority for either TC or TS). The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that indicates the amount of buffered traffic for a given TC or TS at the station for transmission to the AP identified by the receiver address of the frame containing the subfield. The queue size subfield may be present in QoS null frames sent by a station, for example, if bit 4 of the QoS control field is set to 1. The AP may use information contained in the queue size subfield to determine the TXOP (transmission opportunity) duration assigned to the station or to determine the uplink (LTL) resources assigned to the station.

In a frame sent by or to a non-High Efficiency (non-HE) station, the following rules may apply to the queue size value:
- The queue size value is the approximate total size, rounded up to the nearest multiple of 256 octets and expressed in units of 256 octets, of all MSDUs and A-MSDUs buffered at the station (excluding the MSDU or A-MSDU contained in the present QoS Data frame) in the delivery queue used for MSDUs and A-MSDUs with TID values equal to the value indicated in the TID subfield of the QoS Control field;
- A queue size value of 0 is used solely to indicate the absence of any buffered traffic in the queue used for the specified TID;
- A queue size value of 254 is used for all sizes greater than 64 768 octets;
- A queue size value of 255 is used to indicate an unspecified or unknown size.

In a frame sent by an HE station to an HE AP, the following rules may apply to the queue size value:
- The queue size value, *QS,* is the approximate total size in octets, of all MSDUs and A-MSDUs buffered at the station (including the MSDUs or A-MSDUs contained in the same PSDU as the frame containing the queue size subfield) in the delivery queue used for MSDUs and A-MSDUs with TID values equal to the value indicated in the TID subfield of the QoS control field;
- The queue size subfield comprises a scaling factor subfield in bits B14-B15 of the QoS control field and an unscaled value, *UV*, in bits B8-B13 of the QoS control field. The scaling factor subfield provides the scaling factor, *on.*

A station may obtain the queue size, *QS,* from a received QoS control field, which contains a scaling factor, *SF,* and an unscaled value, *UV*, as follows:
*QS* =
16 × *UV*, if *SF* is equal to 0;
1024 + 256 × *UV,* if *SF* is equal to 1;
17408 + 2048 × *UV,* if *SF* is equal to 2;
148480 + 32768 × *UV,* if *SF* is equal to 3 and *UV* is less than 62;
> 2147328, if *SF* equal to is 3 and *UV* is equal to 62;
*Unspecified* or *Unknown,* if *SF* is equal to 3 and *UV* is equal to 63.

The TXOP duration requested subfield, which may be included instead of the queue size subfield, may indicate the duration, in units of 32 microseconds (us), that the sending station determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may comprise a BSR control subfield which may contain buffer status information used for UL MU operation. The BSR control subfield may be formed by a control ID, an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and set to 0 otherwise, except that if the ACI bitmap subfield is 0 and the delta TID subfield is 3, then the buffer status of all 8 TIDs is included.

The delta TID subfield, together with the values of the ACI bitmap subfield, may indicate the number of TIDs for which the station is reporting the buffer status. The ACI high subfield may indicate the ACI of the AC for which the BSR is indicated in the queue size high subfield. The ACI to AC mapping is defined as ACI value 0 mapping to AC_BE, ACI value 1 mapping to AC_BK, ACI value 2 mapping to AC_VI, and ACI value 3 mapping to AC_VO. The scaling factor subfield may indicate the unit SF, in octets, of the queue size high and queue size all subfields.

The queue size high subfield may indicate the amount of buffered traffic, in units of SF octets, for the AC identified by the ACI high subfield, that is intended for the station identified by the receiver address of the frame containing the BSR control subfield. The queue size all subfield may indicate the amount of buffered traffic, in units of SF octets, for all Acs identified by the ACI Bitmap subfield, that is intended for the station identified by the receiver address of the frame containing the BSR control subfield.

The queue size values in the queue size high and queue size all subfields are the total sizes, rounded up to the nearest multiple of SF octets, of all MSDUs and A-MSDUs buffered at the station (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than 254 × SF octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. To support this service, a local MAC may use the underlying PHY-level service to transport the MSDUs to a peer MAC entity. Such asynchronous MSDU transport may be performed on a connectionless basis.

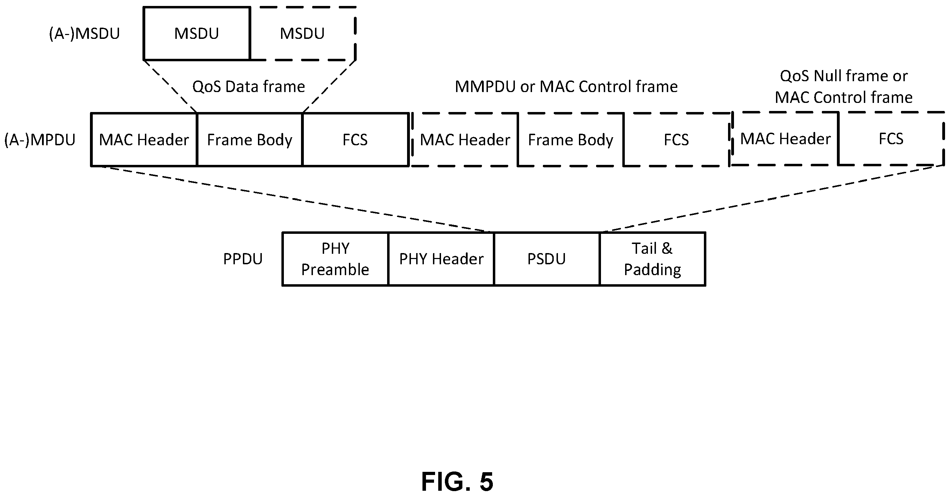

FIG. 5 shows an example format of a PPDU. As shown, the PPDU may comprise a PHY preamble, a PHY header, a PSDU, and tail and padding bits.

The PSDU may comprise one or more MPDUs, such as a QoS data frame, an MMPDU, a MAC control frame, or a QoS null frame. For an MPDU carrying a QoS data frame, the frame body of the MPDU may comprise a MSDU or an A-MSDU. By default, MSDU transport is on a best-effort basis. That is, there is no guarantee that a sent (e.g., transmitted) MSDU will be delivered successfully. The QoS facility may use a traffic identifier (TID) to specify differentiated services on a per-MSDU basis.

A station may differentiate MSDU delivery according to designated traffic category (TC) or traffic stream (TS) of individual MSDUs. The MAC sublayer entities may determine a user priority (UP) for an MSDU based on a TID value provided with the MSDU. The QoS facility may support eight UP values. The UP values may range from 0 to 7 and may form an ordered sequence of priorities, with 1 being the lowest value, 7 the highest value, and 0 falling between 2 and 3.

An MSDU with a particular UP may belong to a traffic category with that UP. The UP may be provided with each MSDU at the medium access control service access point (MAC SAP) directly in a UP parameter. An aggregate MPDU (A-MPDU) may comprise MPDUs with different TID values.

A station may deliver buffer status reports (BSRs) to assist an AP in allocating LTL MU resources. The station may either implicitly deliver BSRs in the QoS control field or BSR control subfield of any frame sent (e.g., transmitted) to the AP (unsolicited BSR) or explicitly deliver BSRs in a frame sent to the AP, for example, based on (e.g., in response to) a BSRP Trigger frame (solicited BSR).

The buffer status reported in the QoS control field may comprise a queue size value for a given TID. The buffer status reported in the BSR control field may comprise an ACI bitmap, delta TID, a high priority AC, and two queue sizes. A station may report buffer status to the AP, in the QoS control field, of sent (e.g., transmitted) QoS null frames and QoS data frames and, in the BSR control subfield (if present), of sent (e.g., transmitted) QoS null frames, QoS data frames, and management frames as defined below.

The station may report the queue size for a given TID in the queue size subfield of the QoS control field of sent (e.g., transmitted) QoS data frames or QoS null frames; the station may set the queue size subfield to 255 to indicate an unknown/unspecified queue size for that TID. The station may aggregate multiple QoS data frames or QoS null frames in an A-MPDU to report the queue size for different TIDs.

The station may report buffer status in the BSR control subfield of sent (e.g., transmitted) frames if the AP has indicated its support for receiving the BSR control subfield. A High-Efficiency (HE) station may report the queue size for a preferred AC, indicated by the ACI high subfield, in the queue size high subfield of the BSR control subfield. The station may set the queue size high subfield to 255 to indicate an unknown/unspecified queue size for that AC. A HE station may report the queue size for ACs indicated by the ACI bitmap subfield in the queue size all subfield of the BSR control subfield. The station may set the queue size all subfield to 255 to indicate an unknown/unspecified BSR for those ACs.

In at least some wireless communications (e.g., a Wi-Fi standard), a triggered TXOP sharing procedure may allow an AP to allocate a portion of the time within an obtained TXOP to a station for transmitting one or more non-trigger-based (non-TB) PPDUs. For the triggered TXOP sharing procedure, the AP may transmit a multi-user request-to-send (MU-RTS) trigger frame with a triggered TXOP sharing mode subfield set to a non-zero value. The MU-RTS trigger frame is a trigger frame for triggering CTS frame(s) from multiple users.

An MU-RTS TXS (triggered TXOP sharing) trigger (MRTT) frame may comprise a MU-RTS trigger frame with a triggered TXOP sharing mode subfield set to a non-zero value (e.g., 1 or 2). During the portion of the allocated time, the station may transmit the one or more non-TB PPDUs to the AP. In this case, a triggered TXOP sharing mode subfield in an MU-RTS TXS trigger frame may be set to 1.

During the portion of the allocated time, the station may transmit the one or more non-TB PPDUs to the AP or a peer station. The peer station may be a station with a connection for peer-to-peer (P2P) communication or direct communication with the station. In this case, a triggered TXOP sharing mode subfield in an MU-RTS TXS trigger frame may be set to 2.

In at least some wireless technologies, stations may not have STR capability. Procedures according to these embodiments may thus be suitable for at least some stations (e.g., at least some IEEE 802.11) radios in single link communication. However, with the necessity of lower latency and higher throughput in at least some P2P communications, at least some stations (e.g., at least some generations of IEEE 802.11 radios) may be designed to support STR operation in single link communication. Using STR operation in single link communication may provide advantages such as improving synchronization of stations and APs. stations may use non-adj acent channels for transmitting and receiving, which may provide advantages such as reducing adjacent channel interference.

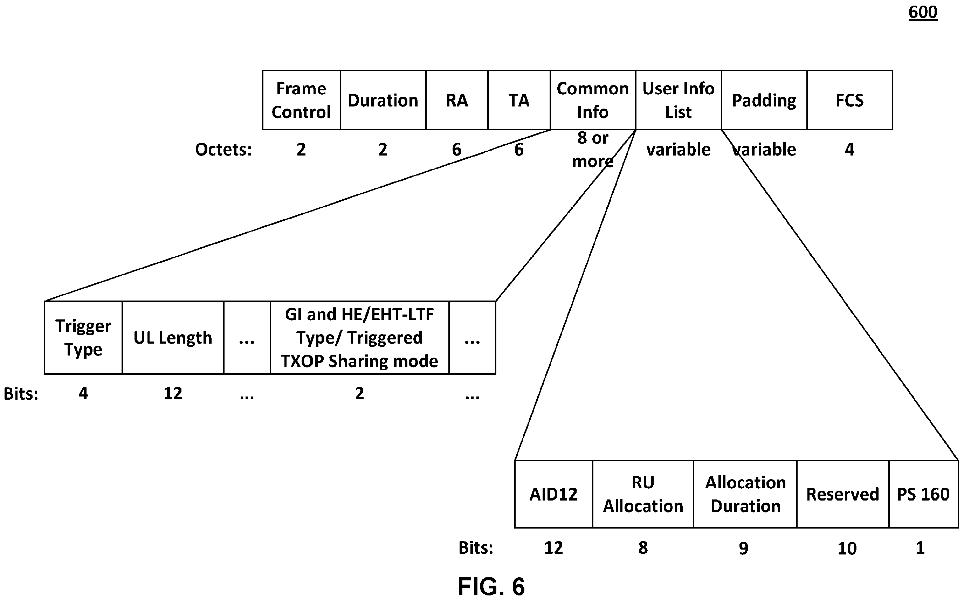

FIG. 6 shows an example of a Multi-User Request-to-Send (MU-RTS) trigger frame which may be used in a triggered Transmit Opportunity (TXOP) sharing (TXS) procedure. The MU-RTS trigger frame may comprise a frame control field, a duration field, a receiver address (RA) field, a transmitter address (TA) field, a common info field, a user info list field, a padding field, and/or frame check sequence (FCS) field. The common info field may be a high-efficiency (HE) variant common info field or an extremely high throughput (EHT) variant common info field.

An EHT variant common info field may comprise one or more of the following subfields: trigger type, UL length, more TF, CS required, UL BW, GI and HE/EHT-LTF Type/Triggered TXOP sharing mode, number of HE/EHT-LTF symbols, LDPC extra symbol segment, AP Tx Power, Pre-FEC padding factor, PE disambiguity, UL spatial reuse, HE/EHT P160, special user info field flag, EHT reserved, reserved, or trigger dependent common info. The trigger type subfield may indicate an MU-RTS trigger frame.

The GI and HE/EHT-LTF Type/Triggered TXOP sharing mode subfield may include a triggered TXOP sharing mode subfield (e.g., when the trigger type subfield indicates an MU-RTS trigger frame). The triggered TXOP sharing mode subfield may be set to a non-zero value (e.g., 1 or 2).

The triggered TXOP sharing mode subfield may indicate that a station indicated by an AID12 subfield (of the user info list field) of the MU-RTS trigger frame may transmit one or more non-TB PPDUs to the AP during the time indicated by the allocation duration subfield. In this case, the triggered TXOP sharing mode subfield may be set to 1. The triggered TXOP sharing mode subfield may indicate that a station indicated by an AID12 subfield of the MU-RTS trigger frame may transmit one or more non-TB PPDUs to the AP or to a peer station during the time indicated by the allocation duration subfield. The peer station may be a station with a connection for P2P communication or direct communication with the station. In this case, the triggered TXOP sharing mode subfield may be set to 2.

An EHT variant user info field may comprise one or more of the following subfields: AID12, RU allocation, allocation duration, reserved, or PS160. The AID12 subfield of the MU-RTS trigger frame may indicate an association identifier (AID) of a station that may use a time indicated by an allocation duration subfield of the MU-RTS trigger frame. The RU allocation subfield of the MU-RTS trigger frame may indicate the location and size of the RU allocated for a station indicated by an AID 12 subfield, which may be used together with the PS160 subfield. The allocation duration subfield may include an allocation duration subfield (e.g., when the triggered TXOP sharing mode subfield is set to a non-zero value). The allocation duration subfield may indicate a time allocated by an AP transmitting the MU-RTS trigger frame. The allocated time may be a portion of the time of an obtained TXOP by the AP. For example, the allocation duration subfield may indicate a first time period.

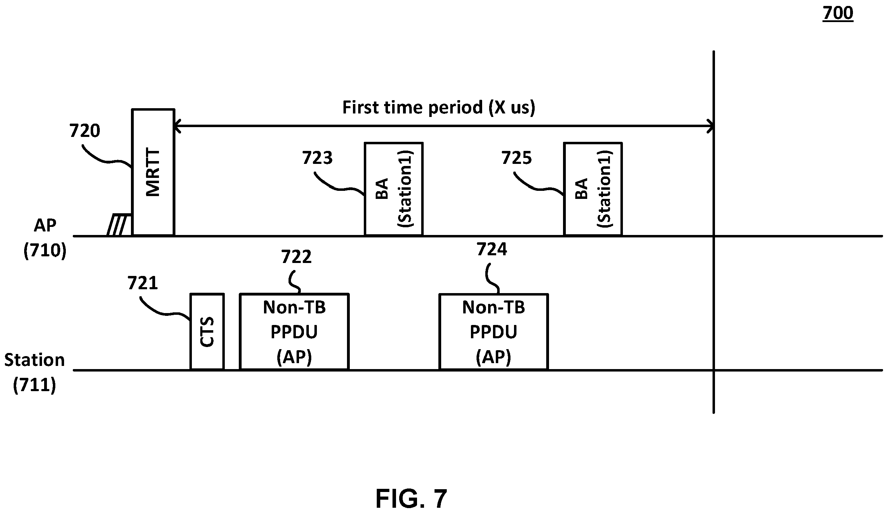

FIG. 7 shows an example of a TXS procedure. The TXS procedure may comprise a Mode 1 procedure. As shown in FIG. 7, the procedure may begin by an AP 710 transmitting an MU-RTS TXS trigger (MRTT) frame 720 to a computing device (e.g., wireless device and/or station). The computing device may be a station 711. MRTT frame 720 may allocate a portion of an obtained TXOP to station 711 and/or may indicate a triggered TXOP sharing mode equal to 1. station 711 receiving MRTT 720 may use the allocated time duration to transmit one or more non-TB PPDUs 722, 724 to AP 710. MRTT frame 720 may comprise a triggered TXOP sharing mode subfield and/or a first time period.

The first time period may indicate a portion of a time allocated by AP 710 within an obtained TXOP. The first time period may be indicated by a subfield in MRTT frame 720. The first time period may be set to a value of X microseconds (µs). The triggered TXOP sharing mode subfield may be set to 1. The triggered TXOP sharing mode subfield set to 1 may indicate that station 711 may transmit one or more non-TB PPDUs to AP 710 during the first time period. The one or more non-TB PPDUs may comprise a data frame, a control frame, a management frame, or an action frame. For example, MRTT frame 720 may define a first time period of X µs. A computing device such as the station 711 may transmit non-TB PPDUs 722, 724 comprising one or more data frame to AP 710 during the first time period, preceded by a CTS frame 721. An AP such as the AP 710 may transmit one or more Block Ack (BA) frames 723, 725 in response to the one or more data frames contained in non-TB PPDUs 722, 724 received from station 711.

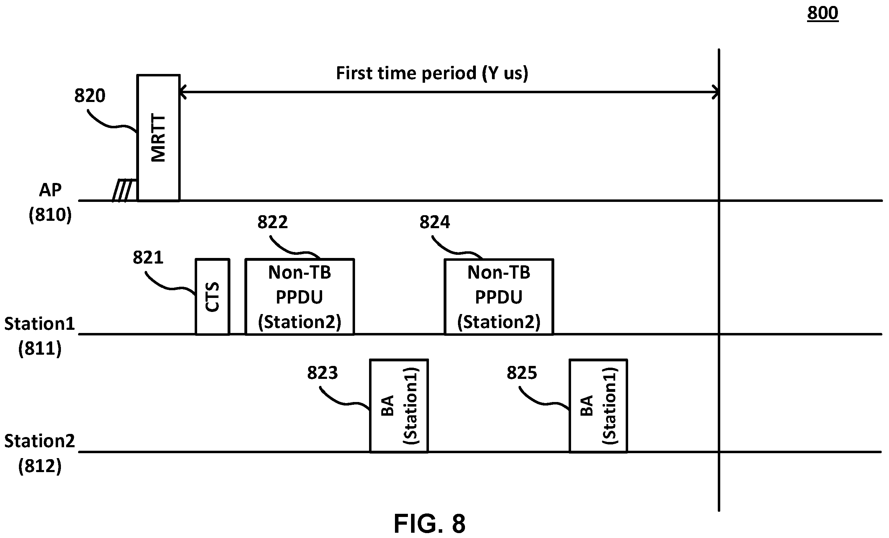

FIG. 8 shows an example of a TXS procedure. The TXS procedure may comprise a Mode 2 procedure. The procedure may begin by an AP 810 transmitting an MRTT frame 820 to a computing device (e.g., wireless device and/or station) such as a station 811. An MRTT frame such as the MRTT frame 820 may allocate a portion of an obtained TXOP to station 811 and may indicate a triggered TXOP sharing mode equal to 2. A station such as the station 811 receiving MRTT 820 may use the allocated time duration to transmit one or more non-TB PPDUs 822, 824 to station2 812. An MRTT frame such as the MRTT frame 820 may comprise a triggered TXOP sharing mode subfield and/or a first time period. The first time period may indicate a portion of a time allocated by AP 810 within an obtained TXOP. The first time period may be indicated by a subfield in MRTT frame 820. The first time period may be set to a value of Y µs.

The triggered TXOP sharing mode subfield may be set to 2. The triggered TXOP sharing mode subfield set to 2 may indicate that station 811 may transmit one or more non-TB PPDUs to AP 810 and/or to a peer computing device (e.g., wireless device and/or station)during the first time period. The peer station may be a station with a connection for P2P communication and/or direct communication with station 811. The one or more non-TB PPDUs may comprise a data frame, a control frame, a management frame, or an action frame.

For example, MRTT frame 820 may define a first time period of Y µs. station 811 may transmit non-TB PPDUs 822, 824 comprising one or more data frame to station 812 during the first time period, preceded by a CTS frame 821. A station such as the station 812 may transmit one or more Block Ack (BA) frames 823, 825 in response to the one or more data frames contained in non-TB PPDUs 822, 824 received from the station 811.

The triggered TXOP sharing procedure may be used to allow an AP to allocate a portion of the time within an obtained TXOP to multiple stations for transmitting PPDUs to other peer stations simultaneously. Frequency Division Multiple Access (FDMA) may be used to allocate channels to each station to communicate with a peer station. In the triggered TXOP sharing procedure for multiple stations, the AP may transmit a MRTT frame with a triggered TXOP sharing mode subfield set to 2. The trigger frame may comprise an information element indicating a direct wireless link between peer stations, including the AID of the target station. The direct wireless link is established according to the tunneled direct link setup (TDLS) protocol.

During the portion of the allocated time, multiple stations may transmit one or more non-TB PPDUs to the AP or peer stations in channels. The peer station may be a station with a connection for peer-to-peer (P2P) communication or direct communication with the station. In this case, a triggered TXOP sharing mode subfield in an MU-RTS TXS trigger frame may be set to 2.

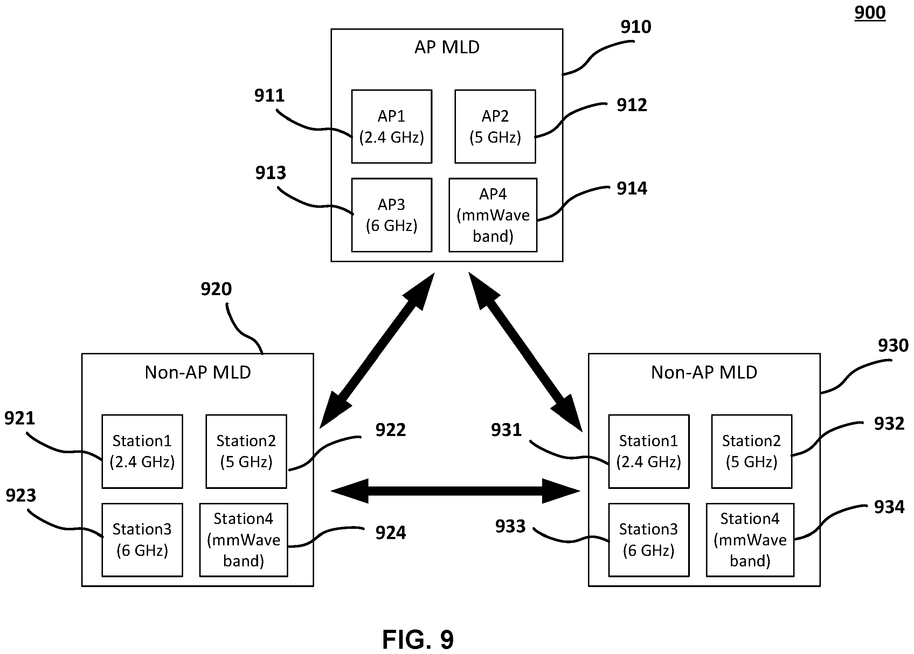

FIG. 9 shows an example of an access point (AP) and two stations operating over multiple links in various frequency bands (e.g., sub-10 GHz and millimeter wave (mmWave) bands). FIG. 9 shows an example BSS 900. Example BSS 900 may include an AP 910 and stations 920 and 930. AP 910 may be an AP MLD device may comprise a plurality of APs, AP1 911, AP2 912, AP3 913, and AP4 914. AP1 911, AP2 912, AP3 913, and AP4 914 may operate over the 2.4 GHz band, the 5 GHz band, the 6 GHz band, and the mmWave band, respectively. station 920 may be a non-AP MLD device comprising a plurality of stations, station1 921, station2 922, station3 923, and station4 924. station1 921, station2 922, station3 923, and station4 924 may operate over the 2.4 GHz band, the 5 GHz band, the 6 GHz band, and the mmWave band, respectively. Similarly, station 930 may be a non-AP MLD device comprising a plurality of stations, station1 931, station2 932, station3 933, and station4 934. station1 931, station2 932, station3 933, and station4 934 may operate over the 2.4 GHz band, the 5 GHz band, the 6 GHz band, and the mmWave band, respectively.

AP 910 may communicate with station 920 and/or station 930 in downlink or uplink. AP 910 may have multiple links with station 920 and/or station 930. AP1 911 may perform downlink/uplink communication with station1 921 and/or station1 931, AP2 912 may perform downlink/uplink communication with station2 922 and/or station2 932, AP3 913 may perform downlink/uplink communication with station3 923 and/or station3 933, and AP4 914 may perform downlink/uplink communication with station4 924 and/or station4 934. For multi-link communications, at least two of the links are in use simultaneously. AP 910, station 920 and/or station 930 may communicate over a single link or remain silent.

Station 920 and station 930 may communicate with each other via a direct link. Direct link communication may be peer-to-peer (P2P) communication. station 920 and station 930 may have multiple links with each other. Direct links may be present between station1 921 and station1 931, station2 922 and station2 932, station3 923 and station3 933, and station4 924 and station4 934. For multi-link communications, at least two of the links are in use simultaneously. station 920 and station 930 may communicate over a single link or remain silent.

Communicating devices (e.g., AP and station or station and station) may not require beamformed links for communication, for example, if the links are in sub-10 GHz bands (e.g., 2.4 GHz, 5 GHz, or 6 GHz). Beamformed links may be needed to achieve reliable communication, for example, if the links are in high frequency bands such as mmWave bands (e.g., especially if the distance between the communicating devices is significant).

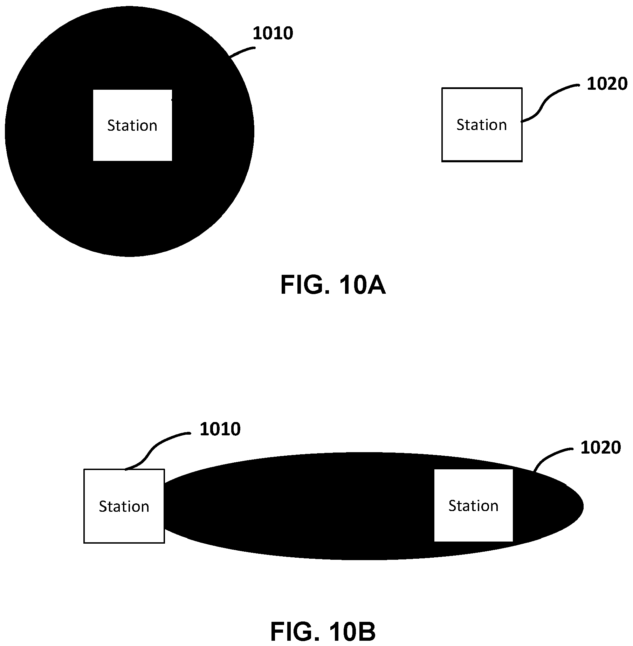

FIG. 10A, FIG. 10B show examples of communication between two stations 1010 and 1020 in a high frequency brand (e.g. mmWave band). stations 1010 and 1020 may be Directional Multi-Gigabit (DMG) stations, stations 1010 and 1020 may be Enhanced DMG (EDMG) stations, stations 1010 and 1020 operating in the mmWave band may follow the beamforming training procedure. Once a beamformed link is obtained, the stations may follow the beamformed link maintenance procedure. Based on the procedure, the station may set a beam link maintenance timer if a station establishes a beamformed link with a peer station. The station shall send (e.g., transmit) QoS null frames to maintain the beamformed link to prevent expiration of the beam link maintenance timer. The station may initiate an initiator sector sweep to restore the beamformed link if the beamformed link expires. The station may communicate with the peer station using a quasi-omni antenna pattern if the beamformed link is not restored.

As shown in FIG. 10A, station 1010 may not have a beamformed link with station 1020. station 1010 may send (e.g., transmit) to station 1020 using a quasi-omni antenna pattern. Conversely, station 1020 may receive from station 1010 using a quasi-omni antenna pattern. The communication may not be reliable, depending on the distance between stations 1010 and 1020. As shown in FIG. 10B, station 1010 may have a beamformed link with station 1020. station 1010 may send (e.g., transmit) to station 1020 using a directional antenna pattern (e.g., after beamforming training). station 1020 may receive from station 1010 using a directional antenna pattern. Reliability of the communication between stations 1010 and 1020 may increase and/or the communication distance may be extended.

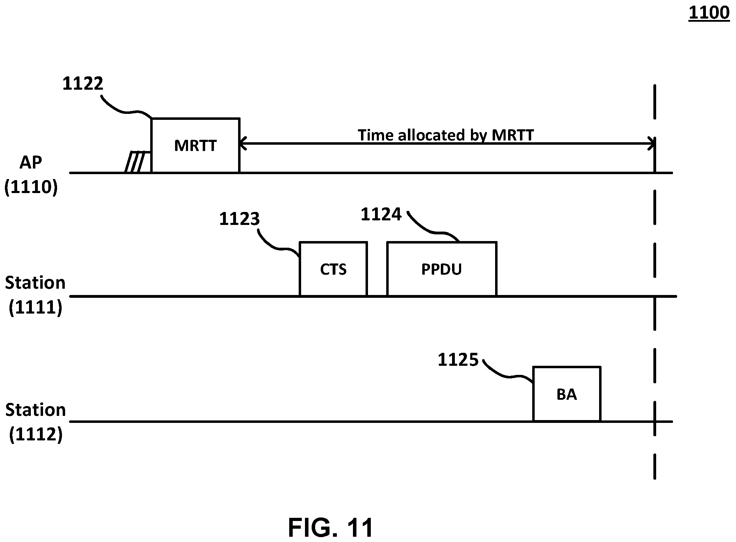

The operation of stations in the mmWave band may be defined by one or more standards and/or standard amendments (e.g., the IEEE 802.11ad/ay standard amendments). In at least some communications, a TXS procedure may not enable P2P communication between stations. At least some radios, such as IEEE 802.11 radios (e.g., Ultra-High Reliability (UHR) 802.11 radios), which may be MLDs, may operate over multiple frequency ranges, such as both the sub-GHz and mmWave bands. For the P2P operation of such devices, the TXS procedure may be defined for sub-GHz bands (e.g., in IEEE 802.11be) and/or may be defined or not yet defined for mmWave bands. As an option, the TXS procedure, as defined for stations operating in the sub-GHz band in the IEEE 802.1 1be, may be extended to the mmWave band as shown in FIG. 11.

FIG. 11 shows an example 1100 of a triggered TXS procedure (Mode=2) performed in the mmWave band. Example 1100 may include an AP 1110 and a plurality of stations 1111 and 1112. stations 1111 and 1112 may be associated with AP 1110. AP 1110 and stations 1111, 1112 may operate in a mmWave band.

AP 1110 may send (e.g., transmit) a MRTT frame 1122 to allocate a portion of an obtained TXOP to associated stations. MRTT frame 1122 may be a broadcast frame. MRTT frame 1122 may enable a station to communicate with the AP or with a respective peer station during the time allocated by the MRTT frame 1122. A Target AID for an allocated station may be provided in a User Info field for the allocated station in MRTT frame 1122.

MRTT frame 1122 may allocate a portion of the obtained TXOP to station 1111. MRTT frame 1122 may comprise a triggered TXOP sharing mode subfield. The triggered TXOP sharing mode may be set to 2 indicating that station 1111 may send (e.g., transmit) during the allocated time either to AP 1110 or to a peer station, e.g., to station 1112. Additionally, MRTT frame 1122 may assign station 1111 the channel via RU allocation subfield of the User Info field for transmission of a PPDU to station 1112.

Station 1111 may send (e.g., transmit) a CTS frame 1123 to AP 1110, followed by a PPDU 1124 to station 1112, based on (e.g., in response to) MRTT frame 1122 having the triggered TXOP sharing mode set to 2. PPDU 1124 sent (e.g., transmitted) by station 1111 may include a data frame, a control frame, a management frame or an action frame. PPDU 1124 may include a data frame. station 1112 may send (e.g., transmit) a Block Ack (BA) frame 1125 based on (e.g., in response to) the data frame contained in PPDU 1124.

station 1111 may not have a beamformed link to station 1112 for the mmWave band even if allocated by AP 1110 in MRTT frame 1122. The transmission reliability of CTS frame 1123 and/or PPDU 1124 over the mmWave band may thus be reduced, resulting in an increased error rate. Depending on the distance between stations 1111 and 1112, the P2P communication may even fail between stations 1111 and 1112. Allocated TXS resources may thus be wasted.

Examples described herein may improve operations by sharing station beamforming information for a mmWave band with an AP, before the AP determines a station allocation for a TXOP over the mmWave band. stations operating in a mmWave band may share beamforming information with an AP before a TXS procedure. The beamforming information of a first station may comprise an indication of whether the first station has a beamformed link to at least a second station for the mmWave band. A beamformed link may refer to a communication link on which a transmit/receive beamforming configuration has been established between a transmitter and a receiver. The AP may use this information to allocate a portion of an obtained TXOP to associated stations having beamformed links (e.g., to other peer stations), or may use this information to allow a station to perform beamforming training with another peer station before sending (e.g., transmitting) to the peer station using a beamformed link. As the AP may perform more informed scheduling using the station beamforming information, robustness of P2P communications over the mmWave band during the TXS procedure may be improved.

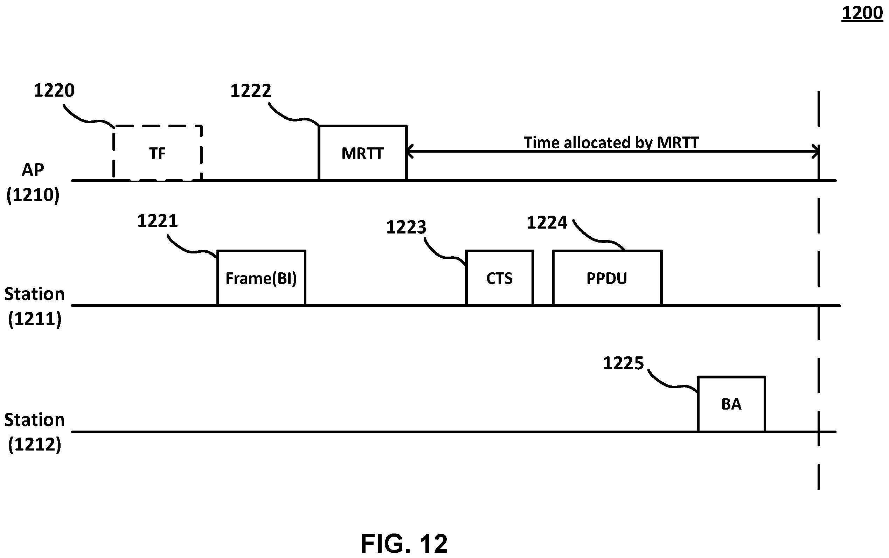

FIG. 12 shows an example 1200 of a proposed TXS procedure performed over a mmWave band. Example 1200 may include AP 1210 and stations 1211, 1212. stations 1211, 1212 may be associated with AP 1210. AP 1210 and stations 1211, 1212 may operate in the mmWave band. AP 1210 and stations 1211, 1212 may comprise respective multi-link devices (MLDs).

Example 1200 may begin by AP 1210 sending (e.g., transmitting) a trigger frame 1220 to station 1211. Trigger frame 1220 is sent (e.g., transmitted) over a sub-10 GHz band. Trigger frame 1220 may be a BSRP trigger frame (solicited BSR). Trigger frame 1220 may indicate a request for beamforming information from station 1211. station 1211 may send (e.g., transmit) a frame 1221 comprising beamforming information based on (e.g., in response to) trigger frame 1220. The beamforming information may comprise an indication of whether station 1211 has a beamformed link to at least other station (e.g., station 1212) for the mmWave band. The beamforming information may comprise an indication that station 1211 does not intend to use beamforming for a transmission to another station. Frame 1221 may be sent (e.g., transmitted) over a sub-10 GHz band. AP 1210 may not send (e.g., transmit) trigger frame 1220. station 1211 may send (e.g., transmit) frame 1221 comprising beamforming information without receiving a trigger frame (unsolicited frame).

Frame 1221 may be a QoS data/null frame comprising a QoS control field, where the QoS control field may comprise the beamforming information. Frame 1221 may be a QoS data/null frame comprising a HT control field, where the HT control field may comprise the beamforming information. Frame 1221 may be an action frame. Frame 1221 may comprise a QoS characteristic element comprising a control info field, where the control info field may comprise the beamforming information.

AP 1210 may consider the beamforming information from station 1211 before a TXS procedure. AP 1210 may or may not include station 1211 in a station allocation for a TXOP obtained by AP 1210 based on the beamforming information. A station allocation for a TXOP may comprise one or more stations allocated for transmission during a portion of the TXOP. AP 1210 may include station 1211 in the station allocation on condition that the beamforming information comprises an indication of station 1211 having a beamformed link to another station or an indication that station 1211 does not intend to use beamforming for a transmission to another station (e.g., due to station 1211 not needing a beamformed link to the other station for reliable transmission).

The beamforming information from station 1211 is assumed to indicate either that station 1211 has a beamformed link to another station or that station 1211 does not intend to use beamforming for a transmission to another station. As shown in FIG. 12, AP 1210 may send (e.g., transmit) an MRTT frame 1222 allocating a portion of the obtained TXOP to station 1211. MRTT frame 1222 may comprise a triggered TXOP sharing mode subfield set to 2, indicating that station 1211 may send (e.g., transmit) to the AP or to another station during the allocated time of the TXOP. station 1211 may choose station 1212 as a target station for a first transmission during the allocated time. station 1211 may send (e.g., transmit) a CTS frame 1223 to AP 1210, followed by a PPDU 1224 to station 1212 based on choosing the target station. station 1211 may send (e.g., transmit) PPDU 1224 via the beamformed link to station 1212 if station 1211 has a beamformed link to station 1212. station 1211 may send (e.g., transmit) PPDU 1224 via a non-beamformed link to station 1212. station 1212 may send (e.g., transmit) a Block Ack (BA) frame 1225 based on (e.g., in response to) the data frame contained in PPDU 1224.

AP 1210 may make an informed decision on the station allocation for the obtained TXOP with frame 1221 comprising the beamforming information (e.g., an indication of whether station 1211 has a beamformed link to another station or an indication that station 1211 does not intend to use beamforming for a transmission to another station). The beamforming information may eliminate uncertainty regarding the stations that may need beamformed links for successful P2P communications in a TXS procedure. Additional advantages may be realized that the beamforming information may, additionally or alternatively, comprise an indication of station 1211 not having a beamformed link to another station or an indication that station 1211 wishes/requests to perform beamforming training with a second station.

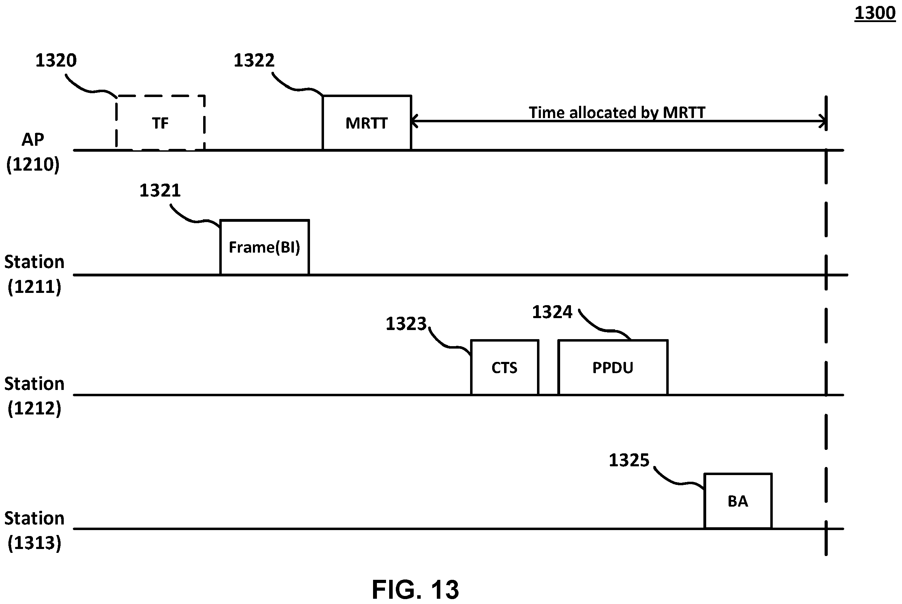

FIG. 13 shows another example 1300 of a proposed TXS procedure performed over a mmWave band. As shown in FIG. 13, example 1300 includes AP 1210 and stations 1211, 1212, 1313. stations 1211, 1212, 1313 may be associated with AP 1210. In an embodiment, AP 1210 and stations 1211, 1212, 1313 may operate in the mmWave band. In an embodiment. AP 1210 and stations 1211, 1212, 1313 may comprise respective multi-link devices (MLDs).

Example 1300 may begin by AP 1210 sending (e.g., transmitting) a trigger frame 1320 to station 1211. Trigger frame 1320 may be sent (e.g., transmitted) over a sub-10 GHz band. Trigger frame 1320 may be a BSRP trigger frame (solicited BSR). Trigger frame 1320 may indicate a request for beamforming information from station 1211. station 1211 may send (e.g., transmit) a frame 1321 comprising beamforming information based on (e.g., in response to) trigger frame 1320. The beamforming information may comprise an indication of whether station 1211 has a beamformed link to at least other station (e.g., station 1212) for the mmWave band. The beamforming information may comprise an indication that station 1211 does not intend to use beamforming for a transmission to another station. Frame 1321 is sent (e.g., transmitted) over a sub-10 GHz band. AP 1210 may not send (e.g., transmit) trigger frame 1220, and station 1211 may transmit frame 1321 comprising beamforming information without receiving a trigger frame (unsolicited frame).

Frame 1321 may be a QoS data/null frame comprising a QoS control field, where the QoS control field may comprise the beamforming information. Frame 1321 may be a QoS data/null frame comprising a HT control field, where the HT control field may comprise the beamforming information. Frame 1321 may be an action frame. Frame 1321 may comprise a QoS characteristic element comprising a control info field, where the control info field may comprise the beamforming information.

AP 1210 may consider the beamforming information from station 1211 before a TXS procedure. AP 1210 may or may not include station 1211 in a station allocation for a TXOP obtained by AP 1210 based on the beamforming information. AP 1210 may not include station 1211 in the station allocation on condition that the beamforming information comprises i) an indication of station 1211 having no beamformed link to another station; or ii) an indication that station 1211 wishes/requests to perform beamforming training with another station; or iii) an indication that station 1211 does not intend to use beamforming for a transmission to another station. AP 1210 may include another station in the station allocation.

Beamforming information from station 1211 may be assumed to indicate either that station 1211 has no beamformed link to another station; or that station 1211 wishes/requests to perform beamforming training with another station; or that station 1211 does not intend to use beamforming for a transmission to another station. As shown in FIG. 13, AP 1210 may transmit an MRTT frame 1322 allocating a portion of the obtained TXOP to a station other than station 1211. AP 1210 may transmit an MRTT frame 1322 to allocate a portion of an obtained TXOP to station 1212 if the beamforming information indicates that station 1212 has a beamformed link with another station. MRTT frame 1322 may comprise a triggered TXOP sharing mode subfield set to 2, indicating that station 1211 may send (e.g., transmit) to the AP or to another station during the allocated time of the TXOP. station 1212 may choose station 1313 as a target station for a first transmission during the allocated time. station 1212 may, based on choosing the target station, send (e.g., transmits) a CTS frame 1323 to AP 1210, followed by a PPDU 1324 to station 1313. station 1313 may send (e.g., transmit) a Block Ack (BA) frame 1325 based on the data frame contained in PPDU 1324.

As shown in example 1300, AP 1210 may prefer to delay allocation of station 1211 until it has a beamformed link and may choose to allocate a portion of an obtained TXOP to another station already having a beamformed link, if the beamforming information comprises i) an indication of station 1211 having no beamformed link to another station, ii) an indication that station 1211 wishes/requests to perform beamforming training with another station before the TXS procedure, or iii) an indication that station 1211 does not intend to use beamforming for a transmission to another station. Accordingly, the proposed embodiments reduce potentially unsuccessful P2P transmissions.

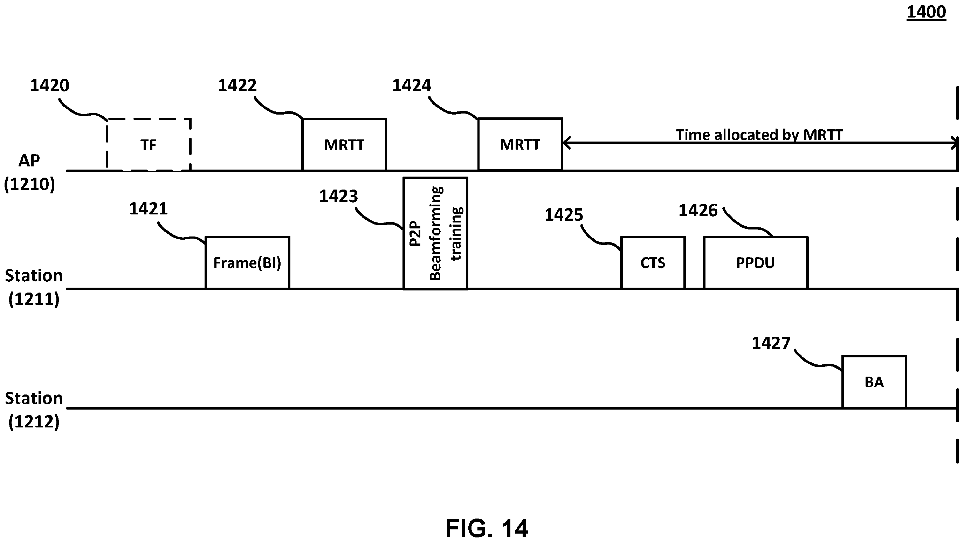

FIG. 14 shows another example 1400 of a proposed TXS procedure performed over a mmWave band. Example 1400 may include AP 1210 and stations 1211, 1212. stations 1211, 1212 may be associated with AP 1210. AP 1210 and stations 1211, 1212 may operate in the mmWave band. AP 1210 and stations 1211, 1212 may comprise respective multi-link devices (MLDs).

Example 1400 may begin by AP 1210 sending (e.g., transmitting) a trigger frame 1420 to station 1211. Trigger frame 1420 may be sent (e.g., transmitted) over a sub-10 GHz band. Trigger frame 1420 may be a BSRP trigger frame (solicited BSR). Trigger frame 1420 may indicate a request for beamforming information from station 1211. station 1211 may send (e.g., transmit) a frame 1421 comprising beamforming information based on (e.g., in response to) trigger frame 1420. The beamforming information may comprise an indication that station 1211 wishes to perform beamforming training with another station. The beamforming information may comprise a request by station 1211 to perform beamforming training with another station. Frame 1421 may be transmitted over a sub-10 GHz band. station 1211 may send (e.g., transmit) frame 1421 comprising beamforming information without receiving a trigger frame (unsolicited frame).

Frame 1421 may be a QoS data/null frame comprising a QoS control field, where the QoS control field may comprise the beamforming information. Frame 1421 may be a QoS data/null frame comprising a HT control field, where the HT control field may comprise the beamforming information. Frame 1421 may be an action frame. Frame 1421 may comprise a QoS characteristic element comprising a control info field, where the control info field may comprise the beamforming information.

AP 1210 may consider the beamforming information from station 1211 before a TXS procedure. AP 1210 may or may not include station 1211 in a station allocation for a TXOP obtained by AP 1210 based on the beamforming information. AP 1210 may include station 1211 in the station allocation on condition that the beamforming information may comprise: i) an indication that station 1211 wishes to perform beamforming training with another station; or ii) the beamforming information comprises a request by station 1211 to perform beamforming training with another station.

Beamforming information from station 1211 is assumed to indicate either that station 1211 wishes to perform beamforming training with another station, or that there is a request by station 1211 to perform beamforming training with another station. As shown in FIG. 14, AP 1210 may send (e.g., transmit) an MRTT frame 1422 allocating a portion of the obtained TXOP to station 1211, where the allocation duration may be configured to allow beamforming training with another station. MRTT frame 1422 may comprise a triggered TXOP sharing mode subfield set to 2, indicating that station 1211 may send (e.g., transmit) to the AP or to another station during the allocated time of the TXOP. station 1211 may choose station 1212 as a target station for a first transmission during the allocated time after beamforming training, station 1211 may perform P2P beamforming training 1423 with station 1212 after choosing the target station. AP 1210 may send (e.g., transmit) a further MRTT frame 1424 comprising a further allocation duration for station 1211 to allow a beamformed transmission from station 1211 to station 121, after P2P beamforming training 1423 is completed and that station 1211 has a beamformed link with station 1212. station 1211 may send (e.g., transmits) a CTS frame 1425 to AP 1210, followed by a PPDU 1426 to station 1212 via a beamformed link. station 1212 may send (e.g., transmit) a Block Ack (BA) frame 1427 based on (e.g., in response to) the data frame contained in PPDU 1426.

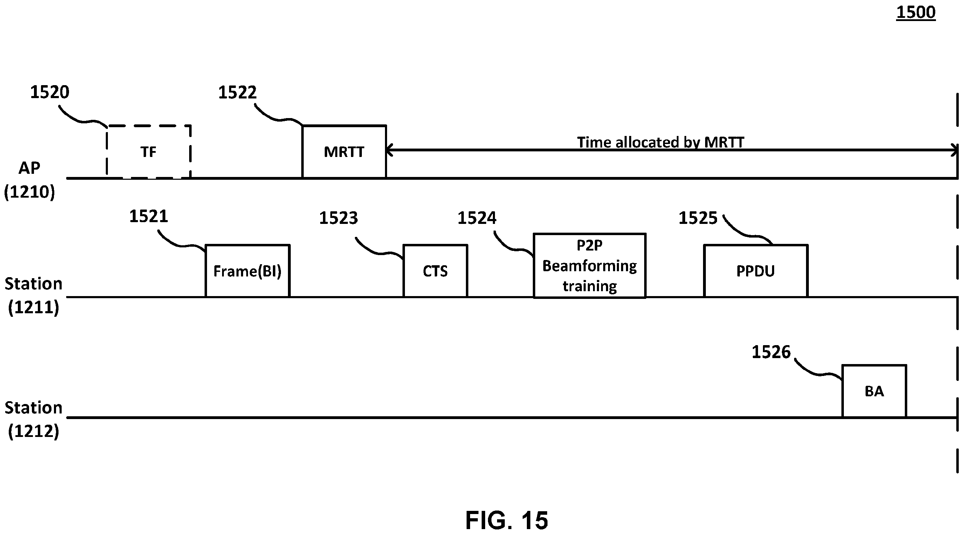

As shown in example 1400, the proposed invention allows a station not having a beamformed link to perform P2P beamforming training before transmitting to a peer station in a TXS procedure. P2P beamforming training may be performed in a different order as shown in FIG. 15.

FIG. 15 shows another example 1500 of a proposed TXS procedure performed over a mmWave band. Example 1500 may include AP 1210 and stations 1211, 1212. stations 1211, 1212 may be associated with AP 1210. AP 1210 and stations 1211, 1212 may operate in the mmWave band. AP 1210 and stations 1211, 1212 may comprise respective multi-link devices (MLDs).

Example 1500 may begin by AP 1210 sending (e.g., transmitting) a trigger frame 1520 to station 1211. Trigger frame 1520 is sent (e.g., transmitted) over a sub-10 GHz band. Trigger frame 1520 may be a BSRP trigger frame (solicited BSR). Trigger frame 1520 may indicate a request for beamforming information from station 1211. station 1211 may send (e.g., transmit) a frame 1521 comprising beamforming information based on (e.g., in response to) trigger frame 1520. The beamforming information may comprise an indication that station 1211 wishes to perform beamforming training with another station. The beamforming information may comprise a request by station 1211 to perform beamforming training with another station. Frame 1521 may be sent (e.g., transmitted) over a sub-10 GHz band. station 1211 may send (e.g., transmit) frame 1521 comprising beamforming information without receiving a trigger frame (unsolicited frame).

Frame 1521 may be a QoS data/null frame comprising a QoS control field, where the QoS control field may comprise the beamforming information. Frame 1521 may be a QoS data/null frame comprising a HT control field, where the HT control field may comprise the beamforming information. Frame 1521 may be an action frame. Frame 1521 may comprise a QoS characteristic element comprising a control info field, where the control info field may comprise the beamforming information.

AP 1210 may consider the beamforming information from station 1211 before a TXS procedure. AP 1210 may or may not include station 1211 in a station allocation for a TXOP obtained by AP 1210 based on the beamforming information. AP 1210 may include station 1211 in the station allocation on condition that i) the beamforming information comprises an indication that station 1211 wishes to perform beamforming training with another station or ii) the beamforming information comprises a request by station 1211 to perform beamforming training with another station.

In example 1500, beamforming information from station 1211 is assumed to indicate either: i) station 1211 wishes to perform beamforming training with another station or ii) there is a request by station 1211 to perform beamforming training with another station. As shown in FIG. 15, AP 1210 may send (e.g., transmit) an MRTT frame 1522 allocating a portion of the obtained TXOP to station 1211, wherein an allocation duration may be configured to allow beamforming training with another station. The allocation duration may be further configured to allow a beamformed transmission from station 1211 to another station within the same TXOP duration. MRTT frame 1522 may comprise a triggered TXOP sharing mode subfield set to 2, indicating that station 1211 may send (e.g., transmit) to the AP or to another station during the allocated time of the TXOP. station 1211 may choose station 1212 as a target station for a first transmission during the allocated time after beamforming training, station 1211 may, based on choosing the target station, send (e.g. transmit) a CTS frame 1523 to AP 1210, followed by performing P2P beamforming training 1524 with station 1212. station 1211 may send (e.g., transmits) a PPDU 1525 to station 1212 via the beamformed link after P2P beamforming training 1524 is completed and that station 1211 has a beamformed link with station 1212. station 1212 may send (e.g., transmit) a Block Ack (BA) frame 1526 based on (e.g., in response to) the data frame contained in PPDU 1525. The example 1500, similar to example 1400, may allow a station not having a beamformed link to perform P2P beamforming training before sending (e.g., transmitting) to a peer station in a TXS procedure, thus, showing the effectiveness of the proposed invention.

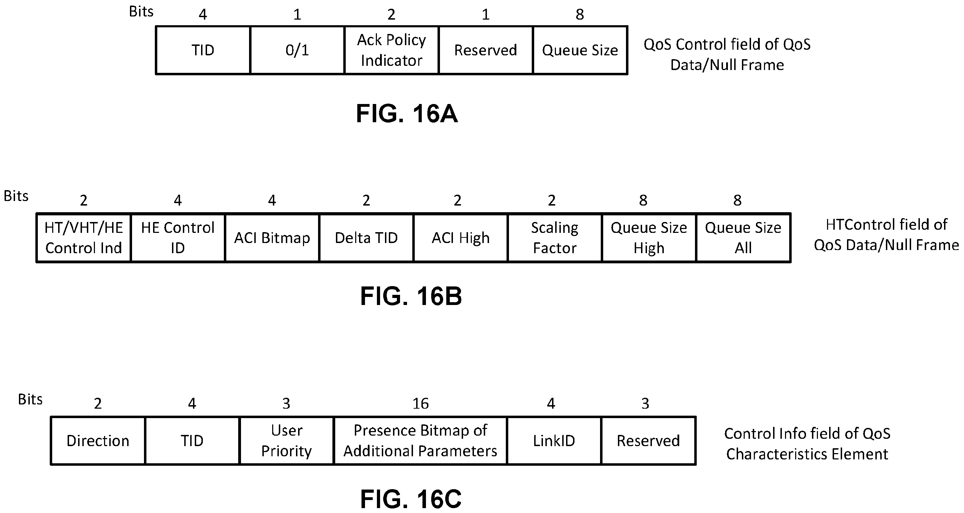

FIG. 16A, FIG. 16B, FIG. 16C show examples of frames/fields in which beamforming information may be signaled by a station to an AP. As described above, the frame carrying the beamforming information (e.g., frame 1221, 1321, 1421, or 1521) may be a QoS data/null frame comprising a QoS control field, where the QoS control field may comprise the beamforming information. The beamforming information may be included in a reserved bit of the QoS control field shown in FIG. 16A. The frame carrying the beamforming information may be a QoS data/null frame comprising a HT control field, where the HT control field may comprise the beamforming information. The beamforming information may be included in one of the subfields of the HT control field shown in FIG. 16B. The frame carrying the beamforming information may comprise a QoS characteristic element comprising a control info field, where the control info field may comprise the beamforming information. The beamforming information may be included in one or more of the reserved bits of the control info field shown in FIG. 16C. The beamforming information may be carried in an existing or a new action frame.

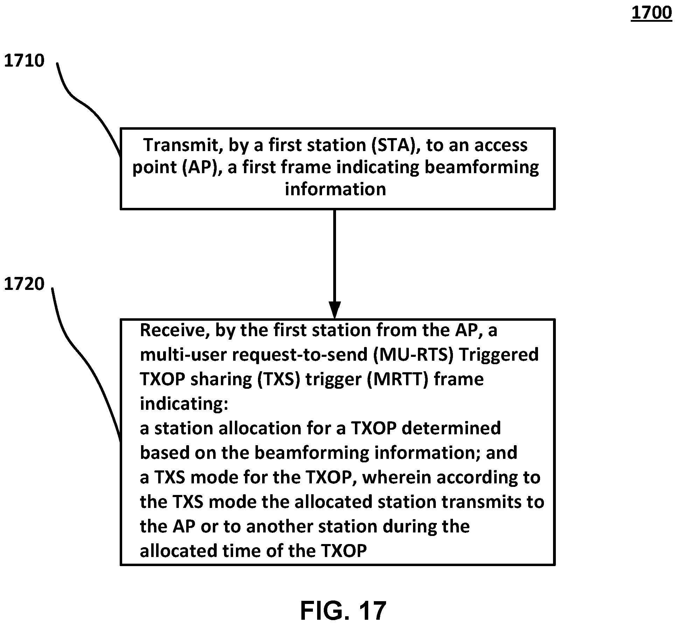

FIG. 17 shows an example process 1700 of station allocation using beamforming information. The process 1700 is provided for the purpose of illustration only and is not limiting. Example process 1700 may be performed by a first station, such as station 1211 in the context of a TXS procedure. Process 1700 may include, in step 1710, sending (e.g., transmitting) by a first station, to an AP, a first frame indicating beamforming information. The first station may be associated with the AP. The first frame may be received in a sub-10 GHz band. The first frame may comprise a QoS data/null frame comprising a QoS control field, wherein the QoS control field may comprise/indicate the beamforming information. The first frame may comprise a QoS data/null frame comprising a HT control field, wherein the HT control field may comprise/indicate the beamforming information. The first frame may comprise a QoS characteristic element comprising a control info field, wherein the control info field may comprise/indicate the beamforming information. The first frame may comprise an action frame.

Beamforming information may comprise an indication of whether the first station has a beamformed link to a second station. The beamforming information may comprise an indication that the first station may wish to perform beamforming training with a second station. The beamforming information may comprise a request by the first station to perform beamforming training with a second station. The beamforming information may comprise an indication that the first station does not intend to use beamforming for a transmission to a second station.

The beamforming information may be for the mmWave band. A first frame may be an unsolicited frame. Process 1700 may further include receiving a trigger frame, by the first station from the AP, and sending (e.g., transmitting) the first frame based on (e.g., in response to) the trigger frame. The trigger frame may be sent (e.g., transmitted) in a sub-10 GHz band.

In step 1720, process 1700 may include receiving by a first station from an AP, a multi-user request-to-send (MU-RTS) trigger TXOP sharing (TXS) trigger (MRTT) frame. The MRTT frame may indicate a station allocation for a TXOP determined based on the beamforming information. The MRTT frame may also indicate a TXS mode for the TXOP. According to the TXS mode, an allocated station may send (e.g., transmit) to the AP or to another station during the allocated time of the TXOP. The MRTT frame may further indicate an allocated time of the TXOP obtained by the AP.

Station allocation may comprise the first station if the first station has a beamformed link to the second station. Orocess 1700 may further comprise sending (e.g., transmitting), by the first station to the second station, a second frame using the beamformed link if the first station has a beamformed link to the second station. Process 1700 may further comprise sending (e.g., transmitting) a CTS frame before sending (e.g., transmitting) the second frame, and receiving a BA frame from the second station based on (e.g., in response to) the second frame. The second frame may comprise a PPDU frame. The station allocation may not comprise the first station if the first station has no beamformed link to the second station.

Station allocation may comprise the first station and does not comprise the second station, if the beamforming information comprises an indication that the first station wishes to perform beamforming training with a second station, or if the beamforming information comprises a request by the first station to perform beamforming training with a second station. The allocation duration may be configured to allow the beamforming training with the second station if the MRTT frame comprises an allocation duration for the first station. Process 1700 may further include performing beamforming training with the second station to obtain a beamformed link with the second station if time is allocated for the first station. Process 1700 may further include receiving, after the beamforming training, a further MRTT frame comprising a further allocation duration for the first station, and sending (e.g., transmitting), via the beamformed link, a second frame to the second station during the further allocation duration. The second frame may comprise a PPDU frame.

An allocation duration may be configured to allow a beamformed transmission from the first station to the second station if the MRTT frame comprises an allocation duration for the first station and the allocation duration is configured to allow the beamforming training with the second station. Process 1700 may include performing beamforming training with the second station, during a first portion of the allocation duration, to obtain a beamformed link with the second station, and sending (e.g., transmitting), via the beamformed link, a second frame to the second station during a second portion of the allocation duration. The second frame may comprise a PPDU frame. The station allocation may not comprise the first station if the beamforming information comprises an indication that the first station wishes to perform beamforming training with a second station, or if the beamforming information comprises a request by the first station to perform beamforming training with a second station.

The station allocation may comprise the first station if the beamforming information comprises an indication that the first station does not intend to use beamforming for a transmission to a second station. Process 1700 may further include sending (e.g., transmitting) a second frame to the second station using a non-beamformed link. The non-beamformed link may be over the mmWave band. Process 1700 may include send (e.g., transmitting) a CTS frame before sending (e.g., transmitting) the second frame, and receiving a BA frame from the second station based on (e.g., in response to) the second frame. The second frame may comprise a PPDU frame.

Station allocation may not comprise the first station if the beamforming information comprises an indication that the first station does not intend to use beamforming for a transmission to a second station. The station allocation may comprise the second station.

A first station, a second station and an AP may operate in the mmWave band. The first station, the second station and the AP may comprise respective multi-link devices (MLDs).

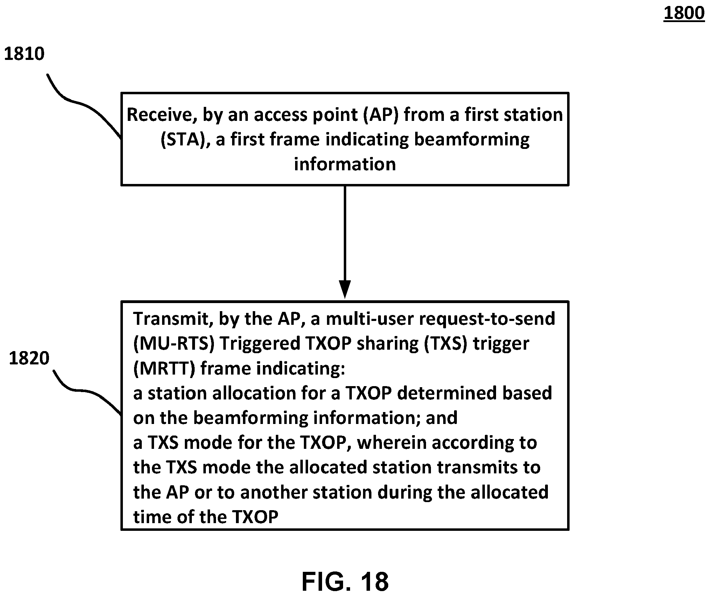

FIG. 18 shows another example process 1800 of station allocation using beamforming information. Example process 1800 is provided for the purpose of illustration only and is not limiting. Example process 1800 may be performed by an AP, such as AP 1210, for example, in the context of a TXS procedure.

As shown in FIG. 18, process 1800 may include, in step 1810, receiving by an AP from a first station, a first frame indicating beamforming information. The first station may be associated with the AP. The first frame may be received in a sub-10 GHz band. The first frame may comprise a QoS data/null frame comprising a QoS control field, which may comprises/indicates the beamforming information. The first frame may comprise a QoS data/null frame comprising a HT control field, which may comprise/indicate the beamforming information. The first frame may comprise a QoS characteristic element comprising a control info field, which may comprise/indicate the beamforming information. The first frame may comprise an action frame.

Beamforming information may comprise an indication of whether the first station has a beamformed link to a second station. The beamforming information may comprise an indication that the first station wishes to perform beamforming training with a second station. The beamforming information may comprise a request by the first station to perform beamforming training with a second station. The beamforming information may comprise an indication that the first station does not intend to use beamforming for a transmission to a second station.

Beamforming information may be for a mmWave band. A first frame may be an unsolicited frame. Process 1800 may further include sending (e.g., transmitting) a trigger frame by the AP, and receiving the first frame from the first station based on (e.g., in response to) the trigger frame. The trigger frame may be sent (e.g., transmitted) in a sub-10 GHz band.

In step 1820, process 1800 may include sending (e.g., transmitting), by the AP, a multi-user request-to-send (MU-RTS) trigger TXOP sharing (TXS) trigger (MRTT) frame. The MRTT frame may indicate a station allocation for a TXOP determined based on the beamforming information. The MRTT frame may also indicate a TXS mode for the TXOP. An allocated station, according to the TXS mode, may send (e.g., transmit) to the AP or to another station during the allocated time of the TXOP. The MRTT frame may further indicate an allocated time of the TXOP obtained by the AP.

Station allocation may comprise the first station if the first station has a beamformed link to the second station. The station allocation may not comprise the first station if the first station has no beamformed link to the second station. The station allocation may comprise the first station and may not comprise the second station if the beamforming information comprises an indication that the first station wishes to perform beamforming training with a second station, or if the beamforming information comprises a request by the first station to perform beamforming training with a second station. The station allocation may not comprise the first station if the beamforming information comprises an indication that the first station wishes to perform beamforming training with a second station, or if the beamforming information comprises a request by the first station to perform beamforming training with a second station.

An allocation duration may be configured to allow the beamforming training with the second station if the MRTT frame comprises an allocation duration for the first station. Process 1800 may further include sending (e.g., transmitting) a further MRTT frame comprising a further allocation duration for the first station to allow a beamformed transmission from the first station to the second station. The allocation duration may be configured to allow a beamformed transmission from the first station to the second station if the MRTT frame comprises an allocation duration for the first station and the allocation duration is configured to allow beamforming training with the second station.

The station allocation may comprise the first station if the beamforming information comprises an indication that the first station does not intend to use beamforming for a transmission to a second station. The station allocation may not comprise the first station if the beamforming information comprises an indication that the first station does not intend to use beamforming for a transmission to a second station.

A first station, a second station and an AP may operate in the mmWave band. The first station, the second station and the AP may comprise respective multi-link devices (MLDs).

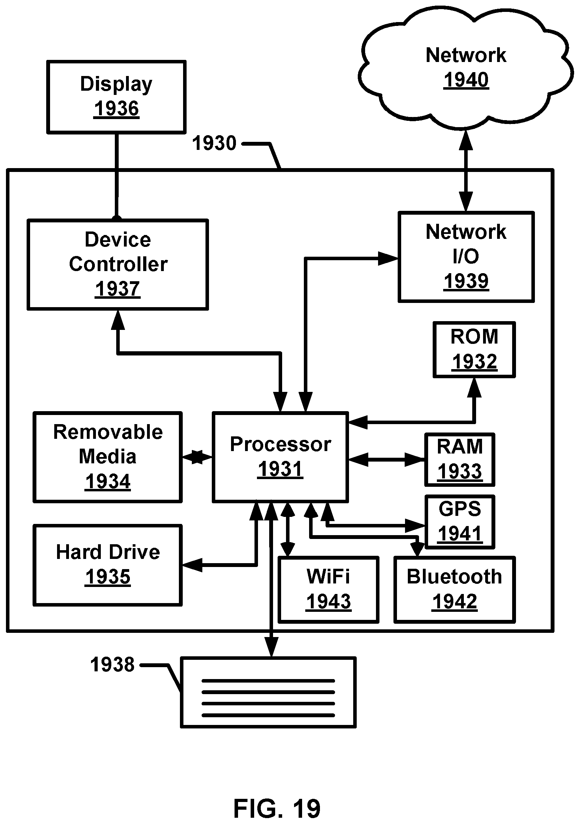

FIG. 19 shows example elements of a computing device that may be used to implement any of the various devices described herein, including, for example, the access point 104-1, 104-2, 710, 810, 911, 912, 913, 914, 1110, and/or 1210, the station 106-1, 106-2, 106-3, 106-4, 106-5, 106-6, 106-7, 106-8, 711, 811, 812, 921, 922, 923, 924, 931, 932, 933, 934, 1010, 1020, 1111, 1112, 1211, 1212 and/or 1313, or any other base station, wireless device, AMF, UPF, network device, or computing device described herein. The computing device 1930 may include one or more processors 1931, which may execute instructions stored in the random-access memory (RAM) 1933, the removable media 1934 (such as a Universal Serial Bus (USB) drive, compact disk (CD) or digital versatile disk (DVD), or floppy disk drive), or any other desired storage medium. Instructions may also be stored in an attached (or internal) hard drive 1935. The computing device 1930 may also include a security processor (not shown), which may execute instructions of one or more computer programs to monitor the processes executing on the processor 1931 and any process that requests access to any hardware and/or software components of the computing device 1930 (e.g., ROM 1932, RAM 1933, the removable media 1934, the hard drive 1935, the device controller 1937, a network interface 1939, a GPS 1941, a Bluetooth interface 1942, a WiFi interface 1943, etc.). The computing device 1930 may include one or more output devices, such as the display 1936 (e.g., a screen, a display device, a monitor, a television, etc.), and may include one or more output device controllers 1937, such as a video processor. There may also be one or more user input devices 1938, such as a remote control, keyboard, mouse, touch screen, microphone, etc. The computing device 1930 may also include one or more network interfaces, such as a network interface 1939, which may be a wired interface, a wireless interface, or a combination of the two. The network interface 1939 may provide an interface for the computing device 1930 to communicate with a network 1940 (e.g., a RAN, or any other network). The network interface 1939 may include a modem (e.g., a cable modem), and the external network 1940 may include communication links, an external network, an in-home network, a provider's wireless, coaxial, fiber, or hybrid fiber/coaxial distribution system (e.g., a DOCSIS network), or any other desired network. Additionally, the computing device 1930 may include a location-detecting device, such as a global positioning system (GPS) microprocessor 1941, which may be configured to receive and process global positioning signals and determine, with possible assistance from an external server and antenna, a geographic position of the computing device 1930.

The example in FIG. 19 may be a hardware configuration, although the components shown may be implemented as software as well. Modifications may be made to add, remove, combine, divide, etc. components of the computing device 1930 as desired. Additionally, the components may be implemented using basic computing devices and components, and the same components (e.g., processor 1931, ROM storage 1932, display 1936, etc.) may be used to implement any of the other computing devices and components described herein. For example, the various components described herein may be implemented using computing devices having components such as a processor executing computer-executable instructions stored on a computer-readable medium, as shown in FIG. 19. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: sending, by a first station, to an access point, a first frame indicating beamforming information.

Clause 1B. The method of clause 1A, further comprising: receiving, by the first station from the access point, a first trigger frame indicating: an allocated time of a transmission opportunity; a station allocation associated with the transmission opportunity, wherein the station allocation is based on the beamforming information; and a triggered transmission opportunity sharing mode associated with the transmission opportunity, wherein the triggered transmission opportunity sharing mode indicates the first station to send a second frame, to the access point or to a second station, during the allocated time of the transmission opportunity. Reference to clause 1 herein may refer to one or both of clause 1A and clause 1B.

Clause 2. The method of clause 1, the method further comprising: performing, based on the first trigger frame, beamforming training with a second station to obtain a beamformed link; and after performing the beamforming training with the second station, receiving a second trigger frame.

Clause 3. The method of any of clauses 1-2, wherein the beamforming information comprises an indication of whether the first station has a beamformed link to the second station, and wherein the method further comprises: sending, by the first station to the second station and using the beamformed link, the second frame.

Clause 4. The method of any of clauses 1-3, wherein the first trigger frame is a multi-user request-to-send (MU-RTS) triggered transmission opportunity (TXOP) sharing (TXS) trigger (MRTT) frame, and wherein: the station allocation comprises the first station, if the first station has a beamformed link to the second station; or the station allocation does not comprise the first station, if the first station has no the first station has no beamforming training request with the second station.

Clause 5. The method of any of clauses 1-4, wherein the second frame comprises a physical layer protocol data unit (PPDU) frame; and wherein the method further comprises: receiving, based on data frame contained in the PPDU frame, a Block Ack (BA) frame from the second station.

Clause 6. The method of any of clauses 1-5, wherein the beamforming information comprises at least one of: an indication that the first station requests to perform beamforming training with the second station; or a request by the first station to perform beamforming training with the second station.

Clause 7. The method of any of clauses 1-6, wherein: the allocated time corresponds to a time duration for the beamforming training with the second station; and the method further comprising: performing, during a first portion of the allocated time, beamforming training with the second station and to obtain a beamformed link with the second station; and sending, to the second station and during a second portion of the allocated time, the second frame via the beamformed link.

Clause 8. The method of any of clauses 1-7, further comprising: receiving, by the first station from the access point, a third trigger frame; and sending, based on the third trigger frame, the first frame.

Clause 9. The method of any of clauses 1-8, wherein the first frame comprises a quality of service (QoS) data frame; and the QoS data frame comprises at least one of: a QoS control field, wherein QoS control field comprises the beamforming information; or a high throughput (HT) control field, wherein the HT control field comprises the beamforming information.

Clause 10. The method of any of clauses 1-9, wherein the first frame comprises a quality of service (QoS) characteristic element the QoS characteristic element comprises a control info field, and the control info field comprises the beamforming information.

Clause 11. The method of any of clauses 1-10, wherein each of the first station, the second station and the access point operates in a mmWave band.

Clause 12. The method of any of clauses 1-11, wherein each of the first station, the second station and the access point comprises a multi-link devices (MLDs).

Clause 13. A computing device comprising: one or more processors; and memory storing instructions that, when executed by the one or more processors, cause the computing device to perform the method of any one of clauses 1-12.

Clause 14. A system comprising: a first station configured to perform the method of any one of clauses 1-12; and an access point configured to send, to the first station, a trigger frame.

Clause 15. A computer-readable medium storing instructions that, when executed, cause performance of the method of any one of clauses 1-12.

Clause 16A. A method comprising: sending, by a first station to an access point, a first frame indicating beamforming information.

Clause 16B. The method of clause 16A, further comprising: receiving, by the first station from the access point, a first trigger frame; performing, based on the first trigger frame, beamforming training with a second station to obtain a beamformed link; and after performing the beamforming training with the second station, receiving a second trigger frame. Reference to clause 16 herein may refer to one or both of clause 16A and clause 16B.

Clause 17. The method of clause 16, wherein the first trigger frame is a multi-user request-to-send (MU-RTS) triggered transmission opportunity (TXOP) sharing (TXS) trigger (MRTT) frame, and wherein: the first trigger frame comprises an allocation duration associated with the first station; and the allocation duration corresponds to a time duration for the beamforming training with the second station, and the method further comprises: performing, during the allocation duration, beamforming training with the second station and to obtain a beamformed link with the second station.

Clause 18. The method of any of clauses 16-17, wherein the second trigger frame is a multi-user request-to-send (MU-RTS) triggered transmission opportunity (TXOP) sharing (TXS) trigger (MRTT) frame, and wherein: the second trigger frame comprising a further allocation duration associated with the first station; and the method further comprises: sending, to the second station and during the further allocation duration, a second frame via the beamformed link.

Clause 19. The method of clauses 18, further comprising sending a Clear-to-Send (CTS) frame before transmitting the second frame.

Clause 20. A computing device comprising: one or more processors; and memory storing instructions that, when executed by the one or more processors, cause the computing device to perform the method of any one of clauses 16-19.

Clause 21. A system comprising: a first station configured to perform the method of any one of clauses 16-19; and an access point configured to send, to the first station, a trigger frame.

Clause 22. A computer-readable medium storing instructions that, when executed, cause performance of the method of any one of clauses 16-19.

Clause 23A. A method comprising: receiving, by an access point from a first station, a first frame indicating beamforming information.

Clause 23B. The method of clause 23A, further comprising: sending, by the access point, a first trigger frame indicating: an allocated time of a transmission opportunity obtained by the access point; a station allocation associated with the transmission opportunity, wherein the station allocation is based on the beamforming information; and a triggered transmission opportunity sharing mode associated with the transmission opportunity, wherein the first station, according to the triggered transmission opportunity sharing mode, sends to the access point or to a second station during the allocated time of the transmission opportunity. Reference to clause 23 herein may refer to one or both of clause 23A and clause 23B.

Clause 24. The method of clause 23, wherein the beamforming information comprises at least one of: an indication that the first station requests to perform beamforming training with the second station; or a request by the first station to perform beamforming training with the second station.

Clause 25. The method of any of clauses 23-24, wherein the first trigger frame is a multi-user request-to-send (MU-RTS) Triggered transmission opportunity (TXOP) sharing (TXS) trigger (MRTT) frame; and wherein: the allocated time allows the beamforming training with the second station.

Clause 26. The method of any of clauses 23-25, further comprising: sending a second trigger frame; and receiving, based on the second trigger frame, the first frame.

Clause 27. The method of any of clauses 23-26, wherein the first frame comprises a quality of service (QoS) data frame; and the QoS data frame comprises at least one of: a QoS control field, wherein the QoS control field comprises the beamforming information; or a high throughout (HT) control field, wherein the HT control field comprises the beamforming information.

Clause 28. The method of any of clauses 23-27, wherein the first frame comprises a quality of service (QoS) characteristic element, the QoS characteristic element comprises a control info field, and the control info field comprises the beamforming information.

Clause 29. The method of any of clauses 23-28, wherein: the station allocation comprises the first station if the first station has a beamformed link to the second station; or the station allocation does not comprise the first station if the first station has no beamforming training request with the second station.

Clause 30. The method of any of clauses 23-29, wherein each of the first station, the second station, and the access point operates in a mmWave band.

Clause 31. The method of any of clauses 23-30, wherein each of the first station, the second station, and the access point comprises respective multi-link devices (MLDs).

Clause 32. A computing device comprising: one or more processors; and memory storing instructions that, when executed by the one or more processors, cause the computing device to perform the method of any one of clauses 23-31.

Clause 33. A system comprising: an access point configured to perform the method of any one of clauses 23-31; and a first station configured to receive, from the access point, a trigger frame.

Clause 34. A computer-readable medium storing instructions that, when executed, cause performance of the method of any one of clauses 23-31.

Clause 35. The method of any of clauses 1-12 or 16-19, wherein the beamforming information comprises an indication that the first station does not intend to use beamforming for a transmission to a second station.

Clause 36. The method of any of clauses 1-12, 16-19 or 35, further comprising sending a second frame to the second station using a non-beamformed link.

Clause 37. The method of any of clauses 1-12, 16-19 or 35-36, wherein the first frame is an unsolicited frame.

Clause 38. The method of any of clauses 1-12, 16-19 or 35-37, wherein the station allocation comprises the second STA.

Clause 39. The method of any of clauses 1-12, 16-19 or 35-38, wherein the first frame is received in a sub-10 GHz band.

Clause 40. The method of any of clauses 1-12, 16-19 or 35-39, wherein the trigger frame is sent in a sub-10 GHz band.

Clause 41. The method of any of clauses 23-31, wherein the station allocation comprises the first station.

Clause 42. The method of any of clauses 23-31 or 41, wherein the station allocation does not comprise the second station.

Clause 43. The method of any of clauses 23-31 or 41-42, wherein the station allocation does not comprise the first station.

Clause 44. The method of any of clauses 23-31 or 41-43, further comprising sending a further trigger frame comprising a allocation duration for the first station to allow a beamformed transmission from the first station to the second station.

Clause 45. The method of any of clauses 23-31 or 41-44, wherein the allocation duration is further configured to allow a beamformed transmission from the first station to the second station.

Clause 46. The method of any of clauses 23-31 or 41-45, wherein the beamforming information comprises an indication that the first station does not intend to use beamforming for a transmission to a second station.

Clause 47. The method of any of clauses 23-31 or 41-46, wherein the station allocation comprises the first station.

Clause 48. The method of any of clauses 23-31 or 41-47, wherein the station allocation does not comprise the first station.

Clause 49. The method of any of clauses 23-31 or 41-48, wherein the first frame is an unsolicited frame.

Clause 50. The method of any of clauses 23-31 or 41-49, wherein the beamforming information is for a mmWave band.

Clause 51. The method of any of clauses 23-31 or 41-50, wherein the MRTT frame further indicates an allocated time of a transmission opportunity (TXOP) obtained by the AP.

Clause 52. The method of any of clauses 23-31 or 41-51, wherein the first frame is received in a sub-10 GHz band.

Clause 52. The method of any of clauses 23-31 or 41-52, wherein the trigger frame is transmitted in a sub-10 GHz band.

Clause 53. The method of any of clauses 23-31 or 41-53, wherein the first frame is an action frame.

A first station may perform a method comprising multiple operations. The first station may send, to an access point, a first frame indicating beamforming information. The first station may receive, by the first station from the access point, a first trigger frame indicating: an allocated time of a transmission opportunity; a station allocation associated with the transmission opportunity, wherein the station allocation may be based on the beamforming information; and a triggered transmission opportunity sharing mode associated with the transmission opportunity, wherein the triggered transmission opportunity sharing mode may indicate the first station to send a second frame (or a first station is to send a second frame), to the access point or to a second station, during the allocated time of the transmission opportunity. The first station may perform, based on the first trigger frame, beamforming training with a second station to obtain a beamformed link; and after performing the beamforming training with the second station, the first station may receive a second trigger frame, wherein the beamforming information may comprise an indication of whether the first station has a beamformed link to the second station. The first station may send, to the second station and using the beamformed link, the second frame, wherein the first trigger frame may be a multi-user request-to-send (MU-RTS) triggered transmission opportunity (TXOP) sharing (TXS) trigger (MRTT) frame, and wherein: the station allocation may comprise the first station, if the first station has a beamformed link to the second station; or the station allocation does not comprise the first station, if the first station has no the first station has no beamforming training request with the second station, wherein the second frame may comprise a physical layer protocol data unit (PPDU) frame. The first station may receive, based on data frame contained in the PPDU frame, a Block Ack (BA) frame from the second station, wherein the beamforming information may comprise at least one of: an indication that the first station requests to perform beamforming training with the second station; or a request by the first station to perform beamforming training with the second station, wherein: the allocated time may correspond to a time duration for the beamforming training with the second station. The first station may perform, during a first portion of the allocated time, beamforming training with the second station and may obtain a beamformed link with the second station. The first station may send, to the second station and during a second portion of the allocated time, the second frame via the beamformed link. The first station may receive, from the access point, a third trigger frame; and may send, based on the third trigger frame, the first frame, wherein the first frame may comprise a quality of service (QoS) data frame; and the QoS data frame may comprise at least one of: a QoS control field, wherein QoS control field may comprise the beamforming information; or a high throughput (HT) control field, wherein the HT control field may comprise the beamforming information, wherein the first frame may comprise a quality of service (QoS) characteristic element, the QoS characteristic element may comprise a control info field, and the control info field may comprise the beamforming information, wherein each of the first station, the second station and the access point may operates in a mmWave band, wherein each of the first station, the second station and the access point may comprise a multi-link devices (MLDs), wherein the beamforming information may comprise an indication that the first station does not intend to use beamforming for a transmission to a second station. The first station may send a second frame to the second station using a non-beamformed link, wherein the first frame may be an unsolicited frame, wherein the station allocation may comprise the second STA, wherein the first frame may be received in a sub-10 GHz band, wherein the trigger frame may be sent in a sub-10 GHz band. A computing device may comprise: one or more processors; and memory storing instructions that, when executed by the one or more processors, cause the computing device to perform the described method, additional operations and/or include the additional elements. A system comprising: a first station configured to perform the described method, additional operations and/or include the additional elements; and an access point configured to send, to the first station, a trigger frame. A computer-readable medium storing instructions that, when executed, cause performance of the described method, additional operations and/or include the additional elements.

A first station may perform a method comprising multiple operations. The first station may send, to an access point, a first frame indicating beamforming information. The first station may receive, from the access point, a first trigger frame. The first station may perform, based on the first trigger frame, beamforming training with a second station to obtain a beamformed link. The first station may receive a second trigger frame after performing the beamforming training with the second station, wherein the first trigger frame may be a multi-user request-to-send (MU-RTS) triggered transmission opportunity (TXOP) sharing (TXS) trigger (MRTT) frame, wherein: the first trigger frame may comprise an allocation duration associated with the first station; and the allocation duration may correspond to a time duration for the beamforming training with the second station. The first station may perform, during the allocation duration, beamforming training with the second station and to obtain a beamformed link with the second station, wherein the second trigger frame may be a multi-user request-to-send (MU-RTS) triggered transmission opportunity (TXOP) sharing (TXS) trigger (MRTT) frame, and wherein: the second trigger frame may comprise a further allocation duration associated with the first station. The first station may send, to the second station and during the further allocation duration, a second frame via the beamformed link. The first station may send a Clear-to-Send (CTS) frame before transmitting the second frame, wherein the beamforming information may comprise an indication that the first station does not intend to use beamforming for a transmission to a second station. The first station may send a second frame to the second station using a non-beamformed link, wherein the first frame may be an unsolicited frame, wherein the station allocation may comprise the second STA, wherein the first frame may be received in a sub-10 GHz band, wherein the trigger frame is sent in a sub-10 GHz band. A computing device may comprise: one or more processors; and memory storing instructions that, when executed by the one or more processors, cause the computing device to perform the described method, additional operations and/or include the additional elements. A system may comprise: a first station configured to perform the described method, additional operations and/or include the additional elements; and an access point configured to send, to the first station, a trigger frame. A computer-readable medium storing instructions that, when executed, cause performance of the described method, additional operations and/or include the additional elements.

An access point may perform a method comprising multiple operations. The access point may receive, from a first station, a first frame indicating beamforming information. The access point may send a first trigger frame indicating: an allocated time of a transmission opportunity obtained by the access point; a station allocation associated with the transmission opportunity, wherein the station allocation may be based on the beamforming information; and a triggered transmission opportunity sharing mode associated with the transmission opportunity, wherein the first station, according to the triggered transmission opportunity sharing mode, may send to the access point or to a second station during the allocated time of the transmission opportunity, wherein the beamforming information may comprise at least one of: an indication that the first station requests to perform beamforming training with the second station; or a request by the first station to perform beamforming training with the second station, wherein the first trigger frame may be a multi-user request-to-send (MU-RTS) Triggered transmission opportunity (TXOP) sharing (TXS) trigger (MRTT) frame, and wherein: the allocated time may allow the beamforming training with the second station. The access point may send a second trigger frame and may receive, based on the second trigger frame, the first frame, wherein the first frame may comprise a quality of service (QoS) data frame; and the QoS data frame may comprise at least one of: a QoS control field, wherein the QoS control field may comprise the beamforming information; or a high throughout (HT) control field, wherein the HT control field may comprise the beamforming information, wherein the first frame may comprise a quality of service (QoS) characteristic element, the QoS characteristic element may comprise a control info field, and the control info field may comprise the beamforming information, wherein: the station allocation may comprise the first station if the first station has a beamformed link to the second station; or the station allocation may not comprise the first station if the first station has no beamforming training request with the second station, wherein each of the first station, the second station, and the access point may operate in a mmWave band, wherein each of the first station, the second station, and the access point may comprise respective multi-link devices (MLDs), wherein the station allocation may comprise the first station, wherein the station allocation may not comprise the second station, wherein the station allocation may not comprise the first station. The access point may send a further trigger frame comprising a allocation duration for the first station to allow a beamformed transmission from the first station to the second station, wherein the allocation duration may be further configured to allow a beamformed transmission from the first station to the second station, wherein the beamforming information may comprise an indication that the first station does not intend to use beamforming for a transmission to a second station, wherein the station allocation may comprise the first station, wherein the station allocation may not comprise the first station, wherein the first frame may be an unsolicited frame, wherein the beamforming information may be for a mmWave band, wherein the MRTT frame may further indicate an allocated time of a transmission opportunity (TXOP) obtained by the AP, wherein the first frame may be received in a sub-10 GHz band, wherein the trigger frame may be sent in a sub-10 GHz band, wherein the first frame may be an action frame. A computing device comprising: one or more processors; and memory storing instructions that, when executed by the one or more processors, cause the computing device to perform the the described method, additional operations and/or include the additional elements. A system comprising: an access point configured to perform the described method, additional operations and/or include the additional elements; and a first station configured to receive, from the access point, a trigger frame. A computer-readable medium storing instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multicarrier communications described herein. The device, or one or more devices such as in a system, may include one or more processors, memory, interfaces, and/or the like. Other examples may comprise communication networks comprising devices such as access points (APs), AP multi-link devices(MLDs), stations (stations), non-AP stations, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method, comprising:
sending, by a first station, to an access point, a first frame indicating beamforming information; and
receiving, by the first station from the access point, a first trigger frame indicating:
an allocated time of a transmission opportunity;
a station allocation associated with the transmission opportunity, wherein the station allocation is based on the beamforming information; and
a triggered transmission opportunity sharing mode associated with the transmission opportunity, wherein the triggered transmission opportunity sharing mode indicates the first station to send a second frame, to the access point or to a second station, during the allocated time of the transmission opportunity.

2. The method of claim 1, the method further comprising:
performing, based on the first trigger frame, beamforming training with a second station to obtain a beamformed link; and
after performing the beamforming training with the second station, receiving a second trigger frame.

3. The method of any of claims 1-2, wherein the beamforming information comprises an indication of whether the first station has a beamformed link to the second station, and
wherein the method further comprises:
sending, by the first station to the second station and using the beamformed link, the second frame.

4. The method of any of claims 1-3, wherein the first trigger frame is a multi-user request-to-send (MU-RTS) triggered transmission opportunity (TXOP) sharing (TXS) trigger (MRTT) frame, and wherein:
the station allocation comprises the first station, if the first station has a beamformed link to the second station; or
the station allocation does not comprise the first station, if the first station has no beamforming training request with the second station.

5. The method of any of claims 1-4, wherein the second frame comprises a physical layer protocol data unit (PPDU) frame; and
wherein the method further comprises:
receiving, based on data frame contained in the PPDU frame, a Block Ack (BA) frame from the second station.

6. The method of any of claims 1-5, wherein the beamforming information comprises at least one of:
an indication that the first station requests to perform beamforming training with the second station; or
a request by the first station to perform beamforming training with the second station.

7. The method of any of claims 1-6, wherein:
the allocated time corresponds to a time duration for the beamforming training with the second station; and the method further comprising:
performing, during a first portion of the allocated time, beamforming training with the second station and to obtain a beamformed link with the second station; and
sending, to the second station and during a second portion of the allocated time, the second frame via the beamformed link.

8. The method of any of claims 1-7, further comprising:
receiving, by the first station from the access point, a third trigger frame; and
sennding, based on the third trigger frame, the first frame.

9. The method of any of claims 1-8, wherein the first frame comprises a quality of service (QoS) data frame; and
the QoS data frame comprises at least one of:
a QoS control field, wherein QoS control field comprises the beamforming information; or
a high throughput (HT) control field, wherein the HT control field comprises the beamforming information.

10. The method of any of claims 1-9, wherein the first frame comprises a quality of service (QoS) characteristic element, the QoS characteristic element comprises a control info field, and the control info field comprises the beamforming information.

11. The method of any of claims 1-10, wherein each of the first station, the second station and the access point operates in a mmWave band.

12. The method of any of claims 1-11, wherein each of the first station, the second station and the access point comprises a multi-link devices (MLDs).

13. A computing device comprising:
one or more processors; and
memory storing instructions that, when executed by the one or more processors, cause the computing device to perform the method of any one of claims 1-12.

14. A system comprising:
a first station configured to perform the method of any one of claims 1-12; and
an access point configured to send, to the first station, a trigger frame.

15. A computer-readable medium storing instructions that, when executed, cause performance of the method of any one of claims 1-12.
